# EUROPEAN PATENT APPLICATION

(11) **EP 2 178 019 A1**
(43) Date of publication of application: **21.04.2010**
(21) Application number: 08790345.6
(22) Date of filing: 01.08.2008
(51) Int. Cl.: G06F 21/24, G06F 21/20

(54) **NETWORK AV CONTENTS REPRODUCTION SYSTEM, SERVER, PROGRAM AND RECORDING MEDIUM**

(30) Priority: 07.08.2007 JP 2007205913
(71) Applicant: Panasonic Corporation, Kadoma-shi Osaka 571-8501 (JP)
(72) Inventor: TAKECHI, Hideaki, Osaka 540-6207 (JP); NISHIMURA, Takuya, Osaka 540-6207 (JP)
(74) Representative: Grünecker, Kinkeldey, Stockmair & Schwanhäusser Anwaltssozietät
(86) International application number: PCT/JP2008/002081
(87) International publication number: WO 2009/019842

(57) **Abstract**

A network AV contents playback system, including:
an audio-visual terminal; and
a storage terminal, wherein
said audio-visual terminal establishes a first connection protected by authentication and encryption, to server providing AV contents on a network; acquires an authorization to use of said AV contents by said first connection, concurrently acquires download control information including AV contents location information that indicates a location of said AV contents on said network and license information about said AV contents; and transmits said acquired download control information to said storage terminal, and
said storage terminal acquires said download control information from said audio-visual terminal, downloads said AV contents from said server based on said AV contents location information via said network and stores said AV contents; acquires a license of said AV contents from said server based on said license information and stores the license; and uses said AV contents for a predetermined period based on said stored license.

## Description

### Technical Field

The present invention relates to a system or the like that distributes contents by using a network and plays back the contents.

### Background Art

With the development of the Internet, technologies for downloading and playing back contents such as movies and music are becoming commonplace. More specifically, many services are provided that allow contents to be downloaded from servers that distributes contents such as movies and music to PCs, audio-video (AV) equipment, mobile phones, and portable devices through a network.

By applying the Digital Rights Management (DRM) technology for the purpose of the copyright protection to such services, contents rental systems that permit users to view and listen to contents limited only on a purchased terminal, have been implemented.

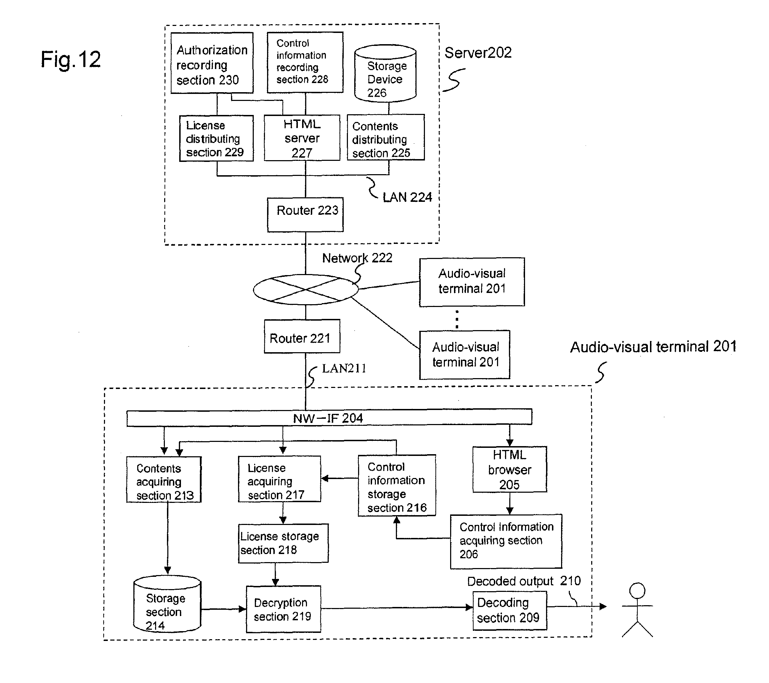

Figure 12 illustrates a configuration of such a system according to a first example of the conventional art. A terminal 201 and a server 202 are interconnected through a network 222. The terminal 201 is connected onto the network 222 typically by using a router 221 that relays IP communications. It is assumed that multiple terminals having a configuration similar to that of the terminal 201 are also connected onto the network 222.

The terminal 201 comprises a network IF 204, a contents acquiring section 213, a storage section 214, a decryption section 219, a decoding section 209, a HTML browser 205, a control information acquiring section 206, a control information storage section 216, a license acquiring section 217 and a license storage section 218. The decoding section 209 has a function of providing a decoded output 210, which is corresponding to an output for an AV terminal of HDMI, for example.

The server 202 comprises a contents distributing section 225, a storage device 226, a HTML server 227, a control information recording section 228, an authorization recording section 230, a license distributing section 229, a router 223 and a LAN 224.

The contents distributing section 225, the HTML server 227, the license distributing section 229 and other sections are a group of servers each of which has a CPU and operates independently and are interconnected by the LAN 224 installed in the server site to cooperate with each other to provide an integrated download server functionality as a whole.

The contents distributing section 225 is provided with the storage device 226 and allows the terminal 201 to download an AV contents file stored in the storage device 226 through the network 222. The AV contents file referred to herein means real-time data containing video, audio and the like. For example, the AV contents file may be a MPEG2 file or a MP3 file.

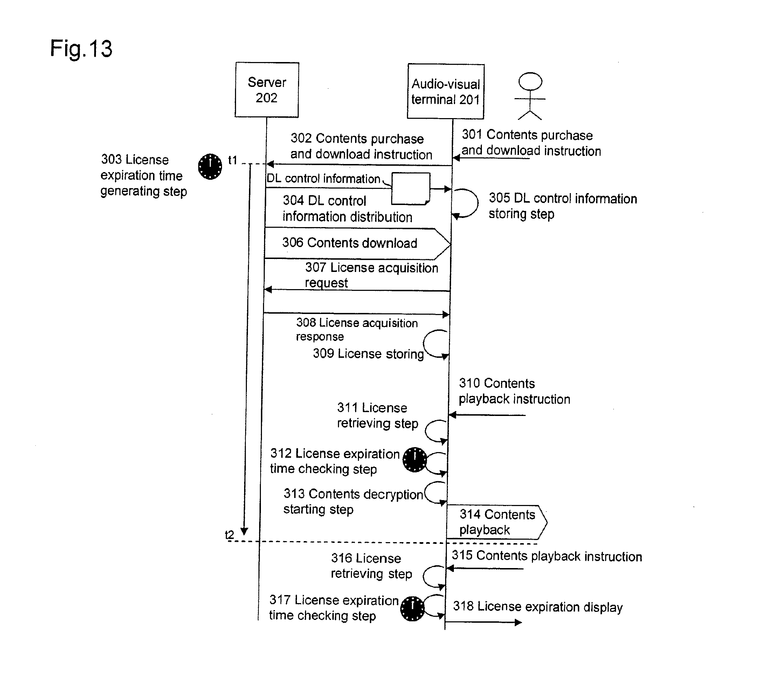

An exemplary operation sequence according to the first example of the conventional art is shown in Figure 13. Operation of the first example of the conventional art will be described with respect to Figure 13. The terminal 201 and the server 202 are interconnected through the Internet and can communicate with each other.

In this configuration, a user operates the terminal 201 (contents purchase and download instruction 301) to access the server 202 by using the HTML browser 205 and can send a contents purchase and download instruction 302. Upon receipt of the contents purchase and download instruction 302, the server 202 generates a term t1 to t2 during which the user is permitted to rent the contents and stores the term t1 to t2 with an ID of the terminal 201 in the authorization recording section 230 of the server 202 at step 303. The stored ID is used to record which terminal purchased the contents.

The server 202 then distributes download (DL) control information to the terminal 201 through the HTML server 227 as a response to the contents purchase and download instruction 302 at step 304. Here, the DL control information is information used for acquiring contents and a license for the contents and includes the URL of the contents stored in the control information recording section 228 and the ID of the license stored in the authorization recording section 230.

The terminal 201 having received the DL control information extracts the DL control information in the HTML by the control information acquiring section 206 and stores the DL control information in the control information storage section 216 at step 305. The terminal 201 then downloads the contents according to the DL control information stored in the control information storage section 216 at step 306.

For example, the download is performed as follows. That is, the contents acquiring section 213 issues a GET method of HTTP to the URL of the contents which the user hopes to purchase, based on the control information stored in the control information storage section 216. The download is performed according to the GET method. The download is completed by acquiring and storing all of the contents in the storage section 214 of the terminal 201.

Once the download is completed, in a license acquisition request 307, the terminal 201 issues a license acquisition request to the server 202 by the license acquiring section 217 based on the DL control information stored in the control information storage section 216. The license acquisition request 307 includes a license ID used for specifying a license to be acquired and a terminal ID of the terminal 201 used for specifying a terminal which requests the license.

The server 202 having received the license acquisition request 307 checks whether the specified license has been purchased in the name of the specified terminal ID or not by verifying the license acquisition request 307 by searching the authorization recording section 230. When the specified license is purchased, the server 202 transmits a license acquisition response 308 by the license distributing section 229 as a response to the license acquisition request 307 and distributes the license. The license referred to herein is information for limiting the playback expiration period of the contents. For example, the license includes an encryption key for decrypting the encrypted contents and the available period of the encryption key. Because the server 202 generated the term t1 to t2 during which the user is permitted to rent the contents, the server 202 distributes the term t1 to t2 as a playback expiration period information.

The storage 201 having received the license stores the license in the license storage section 218 at step 309. If the specified license is not purchased when the server 202 searches the authorization recording section 230, the server 202 doesn't transmit the license acquisition response 308 and doesn't distribute the license.

By the sequence described above, download of the contents and acquisition of the relevant license are completed.

Then, the user operates the terminal 201 to instruct the terminal 201 to play back the downloaded contents at step 310. The terminal 201 retrieves the license stored in the license storage section 218 at step 311, compares the playback period information t1 to t2 in the license with the current time at step 312 and, if the current time is within the expiration time, starts decrypting of the encrypted contents using the encryption key in the license by the decryption section 219 at step 313. As a result of the sequence described above, contents playback 314 of the contents can be performed.

If the user instructs to play back the contents at step 315 of the timing after the rental period t1 to t2 is expired, comparison at step 317 between the playback period information t1 to t2 in the license retrieved at step 316 and the current time will show the expiration of the rental period. Accordingly, a message will be displayed that notifies the user of the expiration at step 318, without playing back the contents.

With the sequence described above, a contents rental system that permits viewing and listening to contents for a limited time only on a purchased terminal has been provided.

The terminal ID referred to herein is an ID for uniquely identifying a terminal for permitting users only limited use on a purchased terminal. The terminal ID is provided(e.g., built-in) in the storage section 214 before shipping, and spoofing of the terminal ID is prevented by issuing, for example a certificate of the ID. (The method of granting an authorization limited specified device in the above description, is referred to as the authorization granting method for device binding in the following, for distinguishing it from a method of granting an authorization to a limited specified user or media.

However, the first example of the conventional art has a first problem that a terminal without the storage section 214 can not perform downloading. For example, even if a network TV set has a HTML browser, can not download if the TV has no storage device.

To deal with the first problem, the TV can have a hard disk drive (abbreviated as HDD, hereinafter) built-in as a storage device. However, there is a second problem in this method. The second problem is that a cost for parts increases and a cost for repairs is needed for the HDD having short life because of having mechanical parts.

As another method to deal with the first problem, a general-purpose AV recorder is connected via a peripheral interface to the TV and is handled as equivalent to the HDD built-in the TV. The peripheral interface is USB, IEEE1394, Serial-ATA or the like. By this method, the second problem can be solved because a commercial existing recorder can be available by attaching externally.

By the way, if contents stored in a recorder can be played back by the recorder freely or the contents can be copied to a media or another recorder, the viewing and listening expiration date permitted for the TV by the server side, can not be secured properly. Then, when using this method, viewing and listening contents in the recorder is limited only for the relevant TV. (That is, the authorization for viewing and listening is granted with bounded to the TV).

More specifically, playback by a TV other than the relevant TV is blocked in such manner that a license storage section and a decryption section are provided in the TV side and the contents are stored in the recorder with encrypted condition.

As a result, by this method naturally, the contents downloaded can not be played back when an operation UI of the recorder side is made without operating an operation UI of the TV side. Furthermore, deleting the contents is difficult without cooperation with the TV side. In this way, there is a third problem that the operation is hard to use.

Another method to solve the third problem can be practical, that is, the contents purchased by the TV side can be played back at both the TV side and the recorder side by using DRM technology of the domain management type. The DRM technology of the domain management type is a technology that can grant an authorization enabled to play back same contents for plural devices. Examples of such DRM technology of the domain management type are disclosed at the patent document 1 and the patent document 2.

In the method of the patent document 1, a domain attribute information is granted to the contents and only a terminal which is given with an attribute information same as the domain information of the contents, is permitted to play back the contents. When the domain attribute information is granted to both the TV and the recorder in this method, same contents can be played back by the operation UI of the TV and the operation UI of the recorder.

In the method of the patent document 2, a home server has a master function which can grant an authorization enabled to play back for other devices and is installed in a home, and the home server grants the authorization enabled to play back for a playback device having slave function. When the master function is equipped with the TV and the slave function is equipped with the recorder in this method, same contents can be played back by the operation UI of the TV and the operation UI of the recorder. Then, the third problem is solved by this method too.
[Patent document 1] Japanese Patent Laid-Open No. 2005-196663
[Patent document 2] Japanese Patent Laid-Open No. 2007-520011

### Disclosure of the Invention

### Problems to be Solved by the Invention

However, about each method of the patent document 1 and patent document 2, there is a problem that each of the TV and the recorder has to have the DRM function. For equipping the DRM function, a standard for maintaining a constant security has to be satisfied. Furthermore, a terminal ID or a certificate for the DRM authentication has to be equipped. There is a fourth problem that the cost increases for providing these functions to all of the TV and the recorders.

In view of the problems from the first to the fourth of the conventional methods described above, it is an object of the present disclosure to provide a contents playback system or the like where the user can view and listen to the contents downloaded to the audio-visual terminal having no storage device, the storage terminal which is not an incorporate type, can be used as the download destination device, the playing back of the contents can be performed by the operation UI of the audio-visual terminal and by the operation UI of the storage terminal, and the downloaded contents can be viewed and listened to without providing DRM function for all terminals.

### Means for Solving the Problems

The 1^{st} aspect of the present invention is a network AV contents playback system, comprising:
an audio-visual terminal; and
a storage terminal,
**characterized in that** said audio-visual terminal:
establishes a first connection protected by authentication and encryption, to one or more servers providing AV contents on a network,
acquires an authorization to use of said AV contents by said first connection, concurrently acquires download control information including AV contents location information that indicates a location of said AV contents on said network and license information about said AV contents, and
transmits said acquired download control information to said storage terminal, and
said storage terminal:
acquires said download control information from said audio-visual terminal, downloads said AV contents from said server based on said AV contents location information via said network and stores said AV contents,
acquires a license of said AV contents from said server based on said license information and stores the license, and
uses said AV contents for a predetermined period based on said stored license.

The 2^{nd} aspect of the present invention is the network AV contents playback system according to the 1^{st} aspect of the present invention, **characterized in that** when said audio-visual terminal acquires an authorization to use, said audio-visual terminal acquires the authorization by specifying a purchase account and, as a result, acquires said download control information including at least the license information that permits decryption by said storage terminal, and
said license information includes a license ID that identifies the authorization to use in said server.

The 3^{rd} aspect of the present invention is the network AV contents playback system according to the 2^{nd} aspect of the present invention, **characterized in that** said storage terminal:
establishes a second connection protected by authentication and encryption, to said server,
by using said second connection, transmits a license acquisition request including the license ID of said AV contents and an ID of said storage terminal, to said server,
acquires the license of said AV contents from said server as a response to said license acquisition request and stores the license, and
decrypts said AV contents in said storage terminal by using an AV contents encryption key included in said license.

The 4^{th} aspect of the present invention is the network AV contents playback system according to the 3^{rd} aspect of the present invention, **characterized in that** said storage terminal:
establishes a third connection protected by authentication and encryption, and
transmits said decrypted AV contents via said third connection, and
said audio-visual terminal displays said AV contents received from said storage terminal via said third connection.

The 5^{th} aspect of the present invention is the network AV contents playback system according to the 4^{th} aspect of the present invention, **characterized in that** transmission of said download control information or said AV contents between said audio-visual terminal and said storage terminal is performed via a LAN or HDMI connection provided between said storage terminal and said audio-visual terminal.

The 6^{th} aspect of the present invention is the network AV contents playback system according to the 3^{rd} aspect of the present invention, **characterized in that** in a case where said storage terminal receives a request for playback of said AV contents from said audio-visual terminal, said storage terminal establishes a third connection protected by authentication and encryption, to said audio-visual terminal and transmits said decrypted AV contents via said third connection, and
said audio-visual terminal displays said AV contents received from said storage terminal via said third connection, and
in a case where said storage terminal receives a request for output of said AV contents from a user interface provided in said storage terminal itself, said storage terminal outputs said decrypted AV contents to an output destination specified by said user interface.

The 7^{th} aspect of the present invention is the network AV contents playback system according to the 3rd aspect of the present invention, **characterized in that** said audio-visual terminal:
has a browser,
establishes said first connection protected by authentication and encryption, to said server on said network by an SSL connection of the browser,
acquires the authorization to use of said AV contents via said first connection, concurrently acquires the download control information including the AV contents location information that indicates the location of said AV contents on said network and the license information about said AV contents, and
transmits said acquired download control information to said storage terminal by a communication module activated via said browser.

The 8^{th} aspect of the present invention is the network AV contents playback system according to the 3^{rd} aspect of the present invention, **characterized in that** in a case where it is confirmed that said audio-visual terminal is LAN-connected to said storage terminal, said storage terminal acquires and uses said download control information, and in a case where said audio-visual terminal is not LAN-connected to said storage terminal, said storage terminal does not acquire said download control information.

The 9^{th} aspect of the present invention is the network AV contents playback system according to the 3^{rd} aspect of the present invention, **characterized in that** said storage terminal performs authentication for said audio-visual terminal and acquires and uses said download control information in a case where said audio-visual terminal is previously registered in a reliable connection target, but does not acquire said download control information in a case where said audio-visual terminal is not previously registered in a reliable connection target.

The 10^{th} aspect of the present invention is the network AV contents playback system according to the 3^{rd} aspect of the present invention, **characterized in that** said storage terminal acquires and uses said download control information in a case where it is confirmed that a certificate granted to said download control information is legitimate, but does not acquire said download control information in a case where it is not confirmed that the certificate is legitimate.

The 11^{th} aspect of the present invention is the network AV contents playback system according to the 3^{rd} aspect of the present invention, **characterized in that** said download control information is encrypted by inter-device authentication between said storage terminal and said audio-visual terminal.

The 12^{th} aspect of the present invention is the network AV contents playback system according to the 1^{st} aspect of the present invention, **characterized in that** said storage terminal is capable of outputting said AV contents to a medium based on said stored license.

The 13^{th} aspect of the present invention is one or more servers that communicate with an audio-visual terminal and a storage terminal via a network,
**characterized in that** said servers:
retains an account and a terminal ID associated with said account,
establishes a first connection protected by authentication and encryption, to said audio-visual terminal,
grants an authorization to use of an AV contents, to said account via said first connection, concurrently transmits download control information including AV contents location information that indicates the location of said AV contents on said network and license information including a license ID that identifies the authorization to use of said AV contents on said server, to said audio-visual terminal, and
establishes a second connection protected by authentication and encryption to said storage terminal, and
when the server receives a license acquisition request from said storage terminal via said second connection, the server compares a license ID of an AV contents included in said license acquisition request with the license ID of the AV contents whose authorization to use is granted to said account to check whether the license IDs agree with each other, further compares a terminal ID included in said license acquisition request with the terminal ID associated with said account to check whether the terminal IDs agree with each other, and distributes a license to said storage terminal in a case where both agree with each other.

The 14^{th} aspect of the present invention is a network AV contents playback system, comprising:
an audio-visual terminal;
a storage terminal; and
one or more servers,
**characterized in that**
said servers retain an account and a terminal ID associated with said account,
said audio-visual terminal
establishes a first connection protected by authentication and encryption, to a server,
uses said first connection to acquire an authorization to use of AV contents granted to said account,
concurrently acquires download control information including AV contents location information that indicates the location of said AV contents on a network and license information including a license ID that identifies the authorization to use of said AV contents on said server, and
transmits said acquired download control information to said storage terminal,
said storage terminal
acquires said download control information from said audio-visual terminal,
establishes a second connection protected by authentication and encryption, to said server, and
uses said second connection to transmit a license acquisition request to said server, the license acquisition request including at least the license ID of said AV contents included in said license information and a terminal ID of said storage terminal,
said server:
compares the license ID of the AV contents included in said license acquisition request with the license ID of the AV contents whose authorization to use is granted to said account to check whether the license IDs agree with each other, further compares the terminal ID of said storage terminal included in said license acquisition request with the terminal ID associated with said account to check whether the terminal IDs agree with each other, and distributes a license to said storage terminal in a case where both agree with each other, and
said storage terminal:
acquires said license from said server, stores said license and decrypts said AV contents using an AV contents encryption key included in said license.

The 15^{th} aspect of the present invention is a network AV contents playback system, comprising:
an instruction terminal;
a storage terminal; and
one or more servers,
**characterized in that**
said servers retain an account and a terminal ID associated with said account,
said instruction terminal establishes a first connection protected by authentication and encryption, to a server and uses said first connection to acquire an authorization to use of AV contents granted to said account,
said storage terminal regularly establishes a fourth connection protected by authentication and encryption, to said server to request distribution of download control information,
said server distributes download control information including AV contents location information that indicates the location of said AV contents on a network and license information including a license ID that identifies the authorization to use of said AV contents on said server, to the storage terminal corresponding to the terminal ID associated with said account via said fourth connection in response to the request for distribution of said download control information,
said storage terminal downloads said AV contents from said server based on said AV contents location information in said download control information, and stores said AV contents,
said storage terminal establishes a second connection protected by authentication and encryption, to said server and uses said second connection to transmit a license acquisition request to said server, the license acquisition request including at least the license ID of said AV contents included in said license information and a terminal ID of said storage terminal,
said server compares the license ID of the AV contents included in said license acquisition request with the license ID of the AV contents whose authorization to use is granted to said account to check whether the license IDs agree with each other, further compares the terminal ID of said storage terminal included in said license acquisition request with the terminal ID associated with said account to check whether the terminal IDs agree with each other, and distributes a license to said storage terminal in a case where both agree with each other, and
said storage terminal acquires said license from said server, stores said license and decrypts said AV contents using an AV contents encryption key included in said license.

The 16^{th} aspect of the present invention is a network AV contents playback system, comprising:
an instruction terminal;
a storage terminal; and
one or more servers,
**characterized in that**
said servers retain an account and a terminal ID associated with said account,
said instruction terminal establishes a first connection protected by authentication and encryption, to a server and uses said first connection to acquire an authorization to use of an AV contents granted to said account,
said server, after said instruction terminal acquires the authorization to use of said AV contents, calls the storage terminal corresponding to the terminal ID associated with said account, to establish a fourth connection and distributes, to said storage terminal, download control information including AV contents location information that indicates the location of said AV contents on a network and license information including a license ID that identifies the authorization of said AV contents on said server,
said storage terminal downloads said AV contents from said server based on said AV contents location information in said download control information, and stores said AV contents,
said storage terminal establishes a second connection protected by authentication and encryption, to said server and uses said second connection to transmit a license acquisition request to said server, the license acquisition request including at least the license ID of said AV contents included in said license information and a terminal ID of said storage terminal,
said server compares the license ID of the AV contents included in said license acquisition request with the license ID of the AV contents whose authorization to use is granted to said account to check whether the license IDs agree with each other, further compares the terminal ID of said storage terminal included in said license acquisition request with the terminal ID associated with said account to check whether the terminal IDs agree with each other, and distributes a license to said storage terminal in a case where both agree with each other, and
said storage terminal acquires said license from said server, stores said license and decrypts said AV contents using an AV contents encryption key included in said license.

The 17^{th} aspect of the present invention is the network AV contents playback system according to the 16^{th} aspect of the present invention, **characterized in that**:
said server requests a download progress list from said storage terminal after said instruction terminal acquires the authorization to use of said AV contents,
said storage terminal transmits said download progress list to said server via said network,
said server acquires the download progress list from said storage terminal and transfers the download progress list to said instruction terminal,
said instruction terminal externally displays the download progress list, and
said server distributes said download control information to said storage terminal in response to receiving a download instruction from said instruction terminal.

The 18^{th} aspect of the present invention is the network AV contents playback system according to the 15^{th} or 16^{th} aspects of the present invention, **characterized in that**:
said instruction terminal is a terminal that serves also as an audio-visual terminal having an audio-visual function or a terminal separate from an audio-visual terminal having an audio-visual function.

The 19^{th} aspect of the present invention is a program that makes a computer operate as the audio-visual terminal and the storage terminal in the network AV contents playback system according to the 1^{st} aspect of the present invention,
in which said audio-visual terminal establishes a first connection protected by authentication and encryption, to one or more servers providing AV contents on a network, uses said first connection to acquire an authorization to use of said AV contents, concurrently acquires download control information including AV contents location information that indicates the location of said AV contents on said network and license information about said AV contents and transmits said acquired download control information to said storage terminal, and
said storage terminal acquires said download control information from said audio-visual terminal, downloads said AV contents from said servers via said network based on said AV contents location information, stores said AV contents, acquires a license of said AV contents from said servers based on said license information, stores the license and uses said AV contents for a predetermined period based on said stored license.

The 20^{th} aspect of the present invention is a program that makes a computer operate as the instruction terminal, the storage terminal and the server in the network AV contents playback system according to the 15^{th} aspect of the present invention,
in which said instruction terminal establishes a first connection protected by authentication and encryption, to said server and uses said first connection to acquire an authorization to use of an AV contents granted to said account,
said storage terminal regularly establishes a fourth connection protected by authentication and encryption, to said server to request distribution of said download control information, downloads said AV contents from said server based on said AV contents location information in said download control information, stores said AV contents, establishes a second connection protected by authentication and encryption, to said server, uses said second connection to transmit a license acquisition request to said server, the license acquisition request including at least the license ID of said AV contents included in said license information and a terminal ID of said storage terminal, acquires said license from said server, stores said license, and decrypts said AV contents using an AV contents encryption key included in said license, and
said server retains said account and the terminal ID associated with said account, distributes download control information including AV contents location information that indicates the location of said AV contents on the network and license information including a license ID that identifies the authorization of said AV contents on said server, to the storage terminal corresponding to the terminal ID associated with said account via said fourth connection in response to the request for distribution of said download control information, compares the license ID of the AV contents included in said license acquisition request with the license ID of the AV contents whose authorization to use is granted to said account to check whether the license IDs agree with each other, further compares the terminal ID of said storage terminal included in said license acquisition request with the terminal ID associated with said account to check whether the terminal IDs agree with each other, and distributes a license to said storage terminal in a case where both the license IDs and the terminal IDs agree with each other.

The 21^{st} aspect of the present invention is a program that makes a computer operate as the instruction terminal, the server and the storage terminal in the network AV contents playback system according to the 16^{th} aspect of the present invention,
in which said instruction terminal establishes a first connection protected by authentication and encryption, to said server and uses said first connection to acquire an authorization to use of an AV contents granted to said account,
said server retains said account and the terminal ID associated with said account, calls ,after said instruction terminal acquires the authorization of said AV contents, the storage terminal corresponding to the terminal ID associated with said account to establish a fourth connection, distributes download control information including AV contents location information that indicates the location of said AV contents on a network and license information including a license ID that identifies the authorization of said AV contents on said server to said storage terminal, compares the license ID of the AV contents included in said license acquisition request with the license ID of the AV contents whose authorization to use is granted to said account to check whether the license IDs agree with each other, further compares the terminal ID of said storage terminal included in said license acquisition request with the terminal ID associated with said account to check whether the terminal IDs agree with each other, and distributes a license to said storage terminal in a case where both the license IDs and the terminal IDs agree with each other, and
said storage terminal downloads said AV contents from said server based on said AV contents location information in said download control information, stores said AV contents, establishes a second connection protected by authentication and encryption, to said server, uses said second connection to transmit a license acquisition request to said server, the license acquisition request including at least the license ID of said AV contents included in said license information and the terminal ID of said storage terminal, acquires said license from said server, stores said license and decrypts said AV contents using an AV contents encryption key included in said license.

The 22^{nd} aspect of the present invention is a recording medium capable of being accessed by a computer, in which the program according to any one of the 19^{th} to 21^{st} aspects of the present inventions is recorded.

### Advantages of the Invention

According to the present invention the user can view and listen to the contents downloaded to the audio-visual terminal having no storage device, the storage terminal which is not incorporate type, can be used as the download destination device, the playing back of the contents can be performed by the operation UI of the audio-visual terminal and by the operation UI of the storage terminal, and the downloaded contents can be viewed and listened to without providing DRM function for all terminals.

### Brief Description of the Drawings

Figure 1 illustrates a configuration of a system according to a first embodiment of the present invention.
Figure 2 illustrates a communication sequence between a terminal and a server according to a first embodiment of the present invention.
Figure 3 illustrates an example of a table of authorization recording data according to a first embodiment of the present invention.
Figure 4 illustrates a configuration of a system according to a second embodiment of the present invention.
Figure 5 illustrates a communication sequence between a terminal and a server according to a second embodiment of the present invention.
Figure 6 illustrates a configuration of a system according to a third embodiment of the present invention.
Figure 7 illustrates a communication sequence between a terminal and a server according to a third embodiment of the present invention.
Figure 8 illustrates a configuration of a system according to a fourth embodiment of the present invention.
Figure 9 illustrates a communication sequence between a terminal and a server according to a fourth embodiment of the present invention.
Figure 10 illustrates a part of a communication sequence between a terminal and a server according to a fourth embodiment of the present invention.
Figure 11 illustrates a configuration of a system according to a fifth embodiment of the present invention.
Figure 12 illustrates a configuration of a system in a example of the conventional art.
Figure 13 illustrates a communication sequence between a terminal and a server in a example of the conventional art.

### Description of Symbols

- 101: Audio-visual terminal
- 102: Server
- 103: Storage terminal
- 104: Network IF
- 105: HTML browser
- 106: Control information acquiring section
- 107: Control information transferring section
- 108: LAN transmission decryption section
- 109: Decoding section
- 110: Decoded output
- 111: LAN
- 112: Network IF
- 113: Contents acquiring section
- 114: Storage section
- 115: Control information acquiring section
- 116: Control information storage section
- 117: License acquiring section
- 118: License storage section
- 119: Decryption section
- 120: LAN transmission encryption section
- 121: Router
- 122: Network
- 123: Router
- 124: LAN
- 125: Contents distributing section
- 126: Storage device
- 127: HTML server
- 128: Control information recording section
- 129: License distributing section
- 130: Authorization recording section
- 201: Audio-visual terminal
- 202: Server
- 204: Network IF
- 205: HTML browser
- 206: Control information acquiring section
- 209: Decoding section
- 210: Decoded output
- 211: LAN
- 213: Contents acquiring section
- 214: Storage section
- 216: Control information storage section
- 217: License acquiring section
- 218: License storage section
- 219: Decryption section
- 221: Router
- 222: Network
- 223: Router
- 224: LAN
- 225: Contents distributing section
- 226: Storage device
- 227: HTML server
- 228: Control information recording section
- 229: License distributing section
- 230: Authorization recording section
- 301: Contents purchase and download instruction
- 302: Contents purchase and download instruction
- 303: License expiration time generating step
- 304: DL control information distribution
- 305: DL control information storing step
- 306: Download of contents
- 307: License acquisition request
- 308: License acquisition response
- 309: License storing step
- 310: Contents playback instruction
- 311: License retrieving step
- 312: License expiration time checking step
- 313: Contents decryption starting step
- 314: Contents playback
- 315: Contents playback instruction
- 316: License retrieving step
- 317: License expiration time checking step
- 318: License expiration display
- 401: Registration sequence
- 402: Download sequence
- 403: Reproduction sequence
- 404: Account login instruction
- 405: Account login
- 406: Terminal ID registration instruction
- 407: Terminal ID registration
- 408: Terminal ID storing
- 409: Account login instruction
- 410: Account login
- 411: Contents purchase instruction
- 412: Contents purchase
- 413: Authorization grant
- 414: Control information distribution
- 415: Control information transfer
- 416: Control information storing
- 417: Contents download
- 418: License acquisition request
- 419: License acquisition response
- 420: License storing
- 421: Contents searching instruction
- 422: Contents searching
- 423: Contents playback instruction
- 424: Contents playback request
- 425: Transmit preparation
- 426: Contents transmission
- 427: Contents playback output
- 601: Audio-visual terminal
- 603: Storage terminal
- 607: Control information transferring section
- 608: HDMI decryption section
- 615: Control information acquiring section
- 620: HDMI encryption section
- 702: Download sequence
- 703: Reproduction sequence
- 715: Control information transfer
- 721: Contents searching instruction
- 722: Contents searching
- 723: Contents playback instruction
- 724: Contents playback request
- 725: Transmit preparation
- 726: Contents transmission
- 727: Contents playback output
- 801: Audio-visual terminal
- 802: Server
- 803: Storage terminal
- 805: HTML browser
- 815: Control information acquiring section
- 828: Control information distributing section
- 901: Registration sequence
- 902: Download sequence
- 907: Terminal ID registration
- 908: Terminal ID storing
- 914: Control information distribution
- 915: Control information transfer
- 916: Control information storing
- 1001: Audio-visual terminal
- 1002: Server
- 1003: Storage terminal
- 1004: Network IF
- 1008: LAN transmission decryption section
- 1009: Decoding section
- 1010: Decoded output
- 1011: LAN
- 1012: Network IF
- 1013: Contents acquiring section
- 1014: Storage section
- 1015: Control information acquiring section
- 1016: Control information storage section
- 1017: License acquiring section
- 1018: License storage section
- 1019: Decryption section
- 1020: LAN transmission encryption section
- 1021: Router
- 1022: Network
- 1023: Router
- 1024: LAN
- 1025: Contents distributing section
- 1026: Storage device
- 1027: HTML server
- 1028: Control information distributing section
- 1029: License distributing section
- 1030: Authorization recording section
- 1031: Control terminal
- 1032: Network IF
- 1033: HTML browser
- 1101: Registration sequence
- 1102: Download sequence
- 1103: Reproduction sequence
- 1104: Account login instruction
- 1105: Account login
- 1106: Terminal ID registration instruction
- 1107: Terminal ID registration
- 1108: Terminal ID storing
- 1109: Account login instruction
- 1110: Account login
- 1111: Contents purchase instruction
- 1112: Contents purchase
- 1113: Authorization grant
- 1115: Control information transfer
- 1116: Control information storing
- 1117: Contents download
- 1118: License acquisition request
- 1119: License acquisition response
- 1120: License storing
- 1121: Contents searching instruction
- 1122: Contents searching
- 1123: Contents playback instruction
- 1124: Contents playback request
- 1125: Transmit preparation
- 1126: Contents transmission
- 1127: Contents playback output
- 1203: Storage terminal
- 1204: CPRM encryption section
- 1205: Medium
- 1301: Address information retain sequence
- 1302: Address notice
- 1303: Step of searching address of the terminal ID
- 1304: Connection request
- 1305: TCP connection
- 1306: Storage information request
- 1307: Storage information distribute
- 1308: Storage information distribute
- 1309: Storage information display
- 1310: Download instruction
- 1311: Download instruction
- 1312: TCP cutting
- 1313: Address notice

### Best Mode for Carrying out the Invention

### (First Embodiment)

In the following, a first embodiment of the present invention will be described with reference to the drawings.

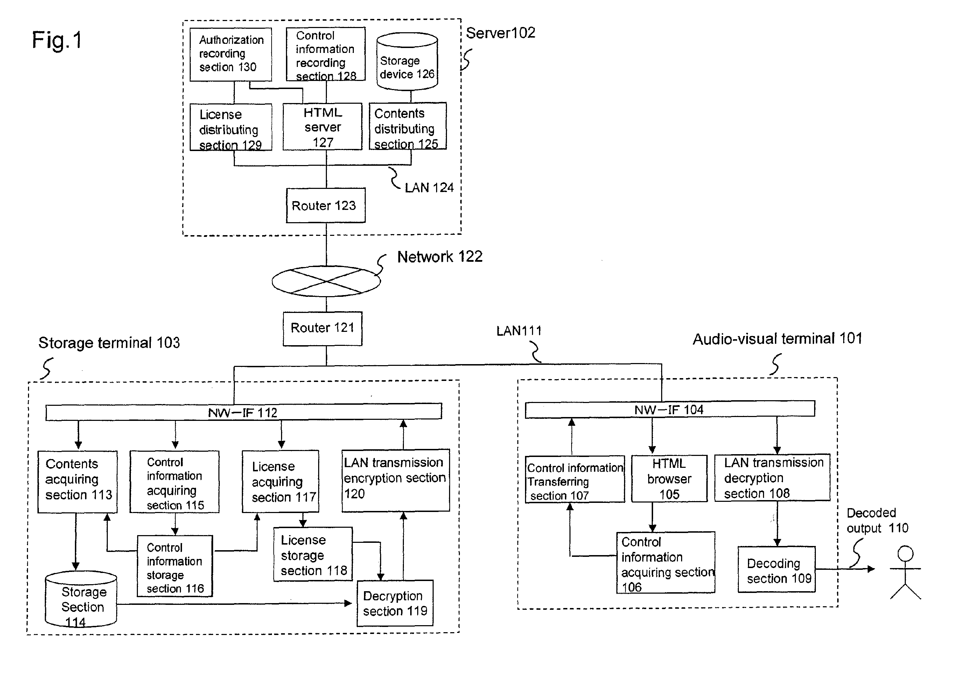

Figure 1 shows a configuration of a system according to this embodiment. An audio-visual terminal 101 and a storage terminal 103 are connected to a LAN 111. These terminals are connected to a server 102 via a router 121 and a network 122. The audio-visual terminal 101 comprises a network IF 104, a LAN transmission decryption section 108, a decoding section 109, a HTML browser 105, a control information acquiring section 106 and a control information transferring section 107. The decoding section 109 has a function of providing a decoded output 110, which is corresponding to a function of outputting an image to, for example, a TV screen.

The storage terminal 103 comprises a network IF 112, a contents acquiring section 113, a storage section 114, a decryption section 119, a LAN transmission encryption section 120, a control information acquiring section 115, a control information storage section 116, a license acquiring section 117 and a license storage section 118.

The server 102 comprises a contents distributing section 125, a storage device 126, a HTML server 127, a control information recording section 128, an authorization recording section 130, a license distributing section 129, a router 123 and a LAN 124. The contents distributing section 125, the HTML server 127, the license distributing section 129 and other sections are a group of servers each of which has a CPU and operates independently and are interconnected by the LAN 124 installed in the server site to cooperate with each other to provide an integrated download server functionality as a whole. Of course, alternatively, these functions can also be provided by one server.

The contents distributing section 125 is provided with the storage device 126 and allows the storage terminal 103 to download an AV contents file stored in the storage device 126 through the network 122.

The AV contents file referred to herein means real-time data containing video, audio and the like. For example, the AV contents file may be a MPEG2 file or a MP3 file. The audio-visual terminal 101 may be, for example, a network digital TV set having a HTML browser. The storage terminal 103 may be, for example, a network digital recorder. Although not shown in Figure 1, the audio-visual terminal 101 and the storage terminal 103 each have a user interface, such as a remote controller and a GUI screen, through which the functions of the terminals can be individually accessed by the user.

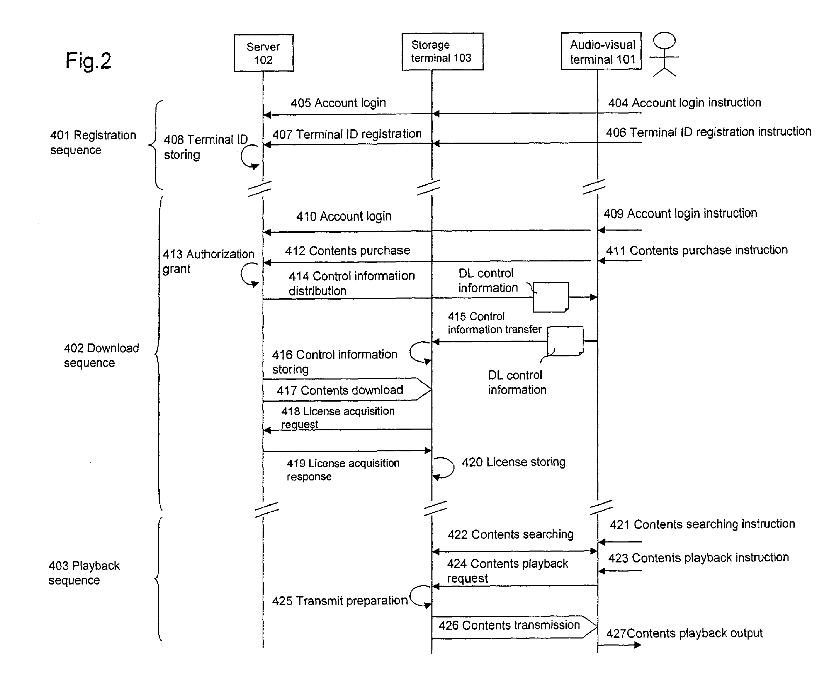

Figure 2 shows a process and a communication sequence in which a user downloads and views and listens to contents by operating the terminals according to this embodiment.

In the following, the operations and the communication procedure will be described step-by-step with reference to Figure 2. In Figure 2, the audio-visual terminal 101, the server 102 and the storage terminal 103 have the configurations shown in Figure 1 and therefore are denoted by the same reference numerals, and illustration of components that offer only well-known functions, such as the network, is omitted. The sequence shown in Figure 2 is generally divided into a registration sequence 401, a download sequence 402 and a playback sequence 403. Typically, these sequences are also temporally separated from each other. The registration sequence 401 is a service registration procedure that has to be performed only once, for example, when the storage terminal 103 is purchased and installed and the registration sequence is performed through the user interface of the storage terminal 103. The download sequence 402 and the playback sequence 403 are performed any number of times by operations of the user on the user interface of the audio-visual terminal 101. In the drawing, arrows indicate these operations.

In the registration sequence 401, first, the user issues an account login instruction 404 to operate the storage terminal 103, thereby accessing the server 102 using the HTML browser or other communication applications to perform an account login communication 405. The account referred to herein is used for managing the history of purchase of contents or managing billing information about the purchased contents. The user previously acquires the account by making a contract with a contents distributor. The server 102 stores the account name and the account password for identifying each account and other entries including settlement method information required for billing. By issuing the account login instruction 404, the user can enter the account name and the password to perform login.

Then, the user operates the storage terminal 103 to perform a terminal ID registration operation 406. This operation can be performed, for example, by pushing a terminal ID registration button in a HTML page in the storage terminal 103. The terminal ID referred to herein is an ID for uniquely identifying a terminal for granting an authorization to use per every terminal based on a device binding method. The terminal ID is built-in in the storage terminal 103 before shipping, and spoofing of the terminal ID is prevented by issuing a certificate of the ID, for example.

Once the terminal ID registration operation 406 occurs, the storage terminal 103 performs communication for a terminal ID registration 407 in response to an instruction received from a button in the HTML page via a plug-in and transmits the terminal ID of the storage terminal 103 to the server 102.

The server 102 having received the terminal ID registration 407 registers the terminal ID of the storage terminal 103 in the account entries of the user in step 408. Through the sequence described above, the terminal ID is registered in association with the account of the user.

In the above description, the storage terminal 103 identifies the terminal ID. Alternatively, however, the user can directly enter and register the terminal ID. Although the direct entry increases the effort of the user, it has an advantage that registration of the terminal ID can be performed on the audio-visual terminal 101, a PC or the like, and thus the storage terminal 103 does not have to have the HTML browser.

The download sequence 402 is started when the user wants to purchase or rent contents. First, the user issues an account login instruction 409 on the audio-visual terminal 101 to access the server 102 using the HTML browser or other communication application, thereby performing an account login communication 410. This operation is the same as in the registration sequence 401. Then, the user browses the page provided by the server 102 using the HTML browser, selects desired contents and perform a contents purchase instruction operation 411. This operation can be performed, for example, by pushing a button in a purchase form in the HTML page. The audio-visual terminal 101 having received the contents purchase instruction operation 411, performs a contents purchase communication 412 by form post or the like to specify the desired contents for the server 102.

In step 413 the server 102 having received the contents purchase communication 412 performs a required billing information registration and the like and then grants an authorization to use the specified contents to the account logging. At the same time, the server 102 registers available period information, such as from t1 to t2, and a use condition, such as the interface that can be used for output and the medium into which the contents can be copied, depending on the purchase condition.

According to this embodiment, at the same time, the server 102 grants an authorization to use based on the device binding to the terminal ID registered in association with the account to which the authorization to use is granted. More specifically, in step 413, the server 102 stores a combination of the license ID for authorization identification, the terminal ID of the storage terminal 103 extracted from the entries for the account logging in, an encryption key for the contents and the use condition, in the authorization recording section 130.

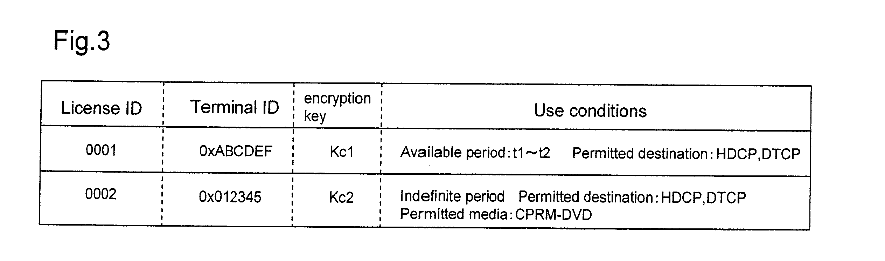

Figure 3 shows an example of a data table stored in the authorization recording section 130. In this drawing, it is assumed that the terminal ID of the storage terminal 103 is "0xABCDEF" and is registered in an entry whose license ID is "0001".

Then, in step 414, the server 102 responds to the contents purchase communication 412 by distributing DL control information to the audio-visual terminal 101 via the HTML server 127. The DL control information referred to herein is information needed to acquire the contents and the license, and includes the contents URL stored in the control information recording section 128 and the ID of the license stored in the authorization recording section 130. The DL control information particularly preferably includes the URL of the license server in addition to the ID of the license to acquire the license, and this is implemented for this embodiment. The URL of the contents referred to above is an example of AV contents location information indicating the location of the contents in the network according to the present invention.

The audio-visual terminal 101 having received the DL control information takes out the DL control information in the HTML by the control information acquiring section 106 and transmits the DL control information to the control information transferring section 107. The control information acquiring section 106 is a plug-in program, a helper application or the like that is activated when the HTML browser 105 recognizes the MIME TYPE of the DL control information, for example. The plug-in program runs by the API of the HTML browser in the process of the HTML browser, and the helper application runs in the process other than that of the HTML browser. In this embodiment, either can be used.

The control information transferring section 107 is a communication module capable of communicating with the control information acquiring section 115 in the storage terminal 103 through the LAN 111. The control information transferring section 107 immediately transfers the information received from the control information acquiring section 106 to the control information acquiring section 115 in a control information transfer communication 415.

The storage terminal 103 having received the DL control information stores the DL control information in the control information storage section 116 in step 416. This transfer can be achieved by an action compliant with the Universal Plug and Play (abbreviated as UPnP hereinafter) developed by the Universal Plug and Play Forum, for example. This arrangement is particularly preferred because the device discovery function of the UPnP allows the audio-visual terminal 101 and the storage terminal 103 to automatically recognize their residing in the same LAN, and the function identification function of the UPnP allows them to automatically confirm that both of them have the control information transferring function, and they can transfer the control information to each other. In the case where this arrangement is adopted, the control information transferring section 107 has an UPnP control point functionality, and the control information acquiring section 115 has an UPnP server functionality.

This embodiment is **characterized in that** the communication between the control information transferring section 107 and the control information acquiring section 115 does not involve any information that requires protection, such as a contents key included in the license, and therefore, information can be transferred in plain text without encryption. However, in order to prevent leakage of name of contents viewed and listened to by a person, from eavesdropping on the LAN 111, encryption using inter-device authentication may be preferably used.

In this embodiment, the storage terminal 103 does not unconditionally accept the DL control information transferred from the audio-visual terminal 101 but checks the control information transfer communication 415 before accepting and stores the DL control information transferred from the audio-visual terminal 101. This check prevents careless acceptance of the DL control information, when such DL control information that describes the URL of the destination of a DOS attack as the download target URL or describes the URL of advertising contents or the like, is transferred from a malicious third party.

Specifically, the DL control information may be accepted only if it checks the IP address of the source or the round-trip delay time between the source and the storage terminal 103 and confirms that the DL control information is not transferred via the Internet but transferred from a source directly connected to the LAN to which the storage terminal 103 is connected. Or the DL control information may be accepted only if the MAC address or other terminal ID of the source is previously registered in the storage terminal 103. Or the DL control information may be accepted only if mutual authentication between the storage terminal 103 and the source is successful. All of these methods effectively block transfer of the DL control information from an outside third party to effectively prevent damage.

Alternatively, the server 102 may previously issue a certificate to the DL control information by using a secret key stored only by the server 102, and the storage terminal 103 may accept the DL control information as legitimate information only if the storage terminal 103 verifies the signature using the public key. This method particularly effectively prevents damage regardless of the transfer path, compared with the other methods.

Then, in step 417, the storage terminal 103 downloads the contents based on the DL control information stored in the control information storage section 116. For example, the download is performed by an HTTP GET method for the URL of the contents, issued from the contents acquiring section 113. The download is completed by acquiring the entire contents and storing the contents in the storage section 114 in the storage terminal 103.

Once the download is completed, in step 418, the storage terminal 103 issues a license acquisition request to the server 102 from the license acquiring section 117 based on the DL control information stored in the control information storage section 116. The destination of the communication for requesting the license is the URL of the license server included in the DL control information.

In this embodiment, the audio-visual terminal 102 that acquires the DL control information from the server 202 and the storage terminal 103 that acquires the license, are separate terminals. Since the source of the requested information (URL of the contents and the URL of the source from which the license is acquired) is described as a full path URL including the domain name, the storage terminal 103 can request the license without missing or short information, using only the DL control information. Thus, the operation is simplified.

The license acquisition request 418 involves the license ID for specifying the desired license and the terminal ID of the storage terminal 103 that requests the license.

The server 102 having received the license acquisition request 418 checks whether the specified license has been purchased in the name of the specified terminal ID or not by verifying the license acquisition request 418 with searching the authorization recording section 130. In this embodiment, since there is an entry that agrees with the specified terminal ID "0xABCDEF" and with the license ID "0001", the server 102 determines that the license is granted and distributes the license in a license acquisition response 419. The license referred to herein is information for limiting the method of playback of the contents. More specifically, the license includes an encryption key Kc1 for decrypting the encrypted contents, the available period of the encryption key (t1 to t2) and the permitted destination (HDCP, DTCP).

The storage terminal 103 having received the license stores the license in the license storage section 118 in step 420. By the sequence described above, the download of the contents and the acquisition of the relevant license are completed.

Then, the playback sequence 403 is started when the user wants to retrieve and play back the downloaded contents. More specifically, the playback sequence 403 is started by the user operating the audio-visual terminal 101 to issue an instruction to search the downloaded contents in step 421. In this embodiment, the contents searching method is a contents searching method using the contents directory service (abbreviated as CDS, hereinafter) of the UPnP method compliant with the digital living network alliance (abbreviated as DLNA, hereinafter).

Although the detailed sequence is not shown, in response to the contents searching instruction, a contents searching communication 422 is bidirectionally performed a plurality of times between the audio-visual terminal 101 and the storage terminal 103, and then, the desired contents can be displayed on the audio-visual terminal 101. Using the UPnP method for contents searching is particularly advantageous in that modules for the device discovery function etc. can be made common, and the software size can be reduced, because the same method can be used for both the DL control information transferring and the contents searching, by adopting such system that the control information transferring section 107 has the UPnP control point functionality and the control information acquiring section 115 has the UPnP server functionality.

Then, in step 423, the user operates the audio-visual terminal 101 to instruct to play back the downloaded contents.

The audio-visual terminal 101 having received the instruction issues a contents playback request 424 according to the DLNA method. The contents playback request 424 referred to herein has an inter-device authentication and transmission path encryption function compliant with the digital transmission contents protection (abbreviated as DTCP, hereinafter) standard as the contents protection method, the LAN transmission encryption section 120 has the functionality of a DTCP-IP server, and the LAN transmission decryption section 108 has the functionality of a DTCP-IP client. This transmission path protection method allows protection from eavesdropping and tampering and realizes proper observance of the specified expiration date even when the contents protected by DRM is transmitted between the audio-visual terminal 101 and the storage terminal 103.

In step 425 the storage terminal 103 having received the contents playback request 424 prepares itself to determine whether to transmit the contents or not and to transmit the contents. More specifically, the storage terminal 103 retrieves the license from the license storage section 118, compares the playback period information t1 to t2 in the license with the current time, and determines that transmission of the contents is permitted only if the current time is within the expiration date. Furthermore, the storage terminal 103 checks the permitted destination in the license and determines that transmission to the DTCP is permitted since the permitted destination includes the DTCP. The storage terminal 103 having determined that transmission is permitted, sets the encryption key Kc1 in the decryption section 119 to start an operation of decrypting the downloaded encrypted contents into a plain text, encrypts the plain text again by using a DTCP encryption key by the LAN transmission encryption section 120, and starts a contents transmission 426 to the LAN.

The audio-visual terminal 101 having received the contents transmission 426 decrypts the DTCP encryption by the LAN transmission decryption section 108, starts decoding the compressed contents by the decoding section 109, and provides the decoded output 110. By the sequence described above, a contents playback 427 can be performed.

In the case where the user instructs to play back the contents after the rental period is expired, it turns out that the rental period is expired in step 425 where the playback period information t1 to t2 in the license is compared with the current time, and therefore, the contents transmission in step 426 is not performed. Thus, the expiration date can be observed.

By the sequence described above, such contents rental system can be realized that the contents downloaded to a terminal previously registered in the server 102 is permitted to be viewed and listened to only within the expiration date.

In this way, according to this embodiment, the first problem of the prior art can be solved because the user can view and listen to the contents downloaded to the audio-visual terminal 101 having no storage device.

Furthermore, the second problem of the prior art can also be solved because the audio-visual terminal 101 does not incorporate the storage terminal 103 but is connected to the storage terminal 103 via the network.

The terminal on which the user can view and listen to the contents is not limited to the audio-visual terminal 101, and any terminal having the DTCP-IP client functionality can play back the contents by transmitting the contents playback request to the storage terminal 103. That is, according to this embodiment, the server 102 only grants an authorization to use for the storage terminal 103 based on device binding method and performs neither registration nor checking of the ID of the terminal on which the contents is viewed and listened to. Furthermore, the storage terminal 103 only verifies whether the terminal is a legitimate DTCP-IP client or not and does not check whether the terminal is an audio-visual terminal 101 or not. Therefore, even when an arbitrary terminal having the DTCP-IP client functionality transmits the contents playback request to the storage terminal 103, the storage terminal 103 performs the same operations as those in steps 424 and 425 described above and checks the entry having the license ID "0001" shown in Figure 3 only to confirm that the available period is not expired and that the output destination includes the DTCP so that the terminal can play back the contents. With this arrangement, even a client having no DRM client functionality can play back the contents on the audio-visual terminal having the DTCP-IP client functionality in the same LAN. For example, as a comparative example, such a method is assumed of distributing contents encrypted by a DRM key Kc, to an arbitrary audio-visual terminal without encryption in the transmission path. Although this method can also safely distribute the copyright-protected contents and permit the contents to be viewed and listened to only on the terminal that observes the use conditions. However, in this case, each audio-visual terminal has to have the DRM client functionality and acquire the key Kc. To the contrary, according to this embodiment, only the storage terminal 103 acquires the key Kc and performs decryption, and the contents are temporarily converted into a plain text and then are transmitted by another transmission path protecting instrument, so that the number of terminals having the DRM functionality can be reduced. Thus, the fourth problem of the prior art can be solved.

Furthermore, even when the user operates the local GUI of the storage terminal 103 itself to issue an instruction to play back the downloaded contents, the contents are decrypted into a plain text by the decryption section 119 and then decoded by a decoder (not shown) in the storage terminal 103, to become capable of playback. Thus, the third problem of the prior art can be solved.

As described above, this embodiment can solve the first to fourth problems of the prior art at the same time.

Although the transmission path protecting means in this embodiment is the DTCP, any other protecting means, such as the HDCP, can also be used.

Furthermore, although the authorization to use is granted only to the storage terminal 103 in this embodiment, the authorization to use can also be granted to the audio-visual terminal 101 at the same time.

### (Second Embodiment)

In the following, a second embodiment of the present invention will be described with reference to the drawings.

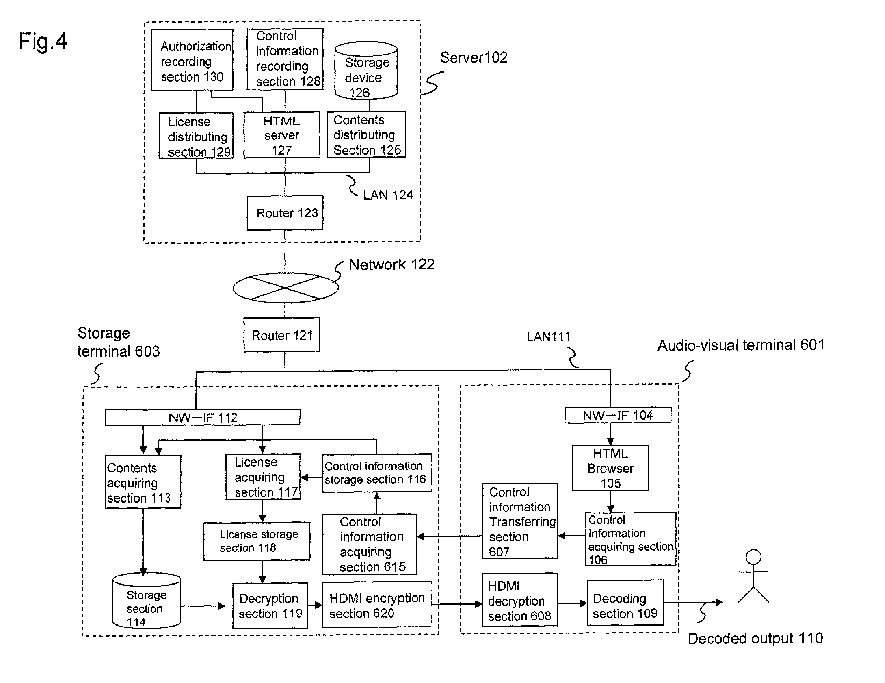

This embodiment differs from the first embodiment primarily in that a high definition multimedia interface (abbreviated as HDMI, hereinafter) connection is used for transmission of the download control information and transfer of the contents, instead of the LAN. In this embodiment, modules that operate in essentially the same way as in the first embodiment, are denoted by the same reference numerals as those in the first embodiment. Figure 4 shows a configuration of a system according to this embodiment.

An audio-visual terminal 601 and a storage terminal 603 are connected to the LAN 111. These terminals 601 and 603 are connected to the server 102 via the router 121 and the network 122.

The audio-visual terminal 601 comprises the network IF 104, a HDMI decryption section 608, the decoding section 109, the HTML browser 105, the control information acquiring section 106 and the control information transferring section 607. The decoding section 109 has a function of providing the decoded output 110, which is corresponding to the function of, for example, outputting an image to a TV screen.

The storage terminal 603 comprises the network IF 112, the contents acquiring section 113, the storage section 114, the decryption section 119, an HDMI encryption section 620, a control information acquiring section 615, the control information storage section 116, the license acquiring section 117 and the license storage section 118.

The server 102 is the same server as in the first embodiment.

The audio-visual terminal 601 may be a network digital TV set having a HTML browser, for example. The storage terminal 603 may be, for example, a network digital recorder. Although not shown in Figure 1, the audio-visual terminal 601 and the storage terminal 603 each have a user interface, such as a remote controller and a GUI screen, through which the functions of the terminals can be individually accessed by the user.

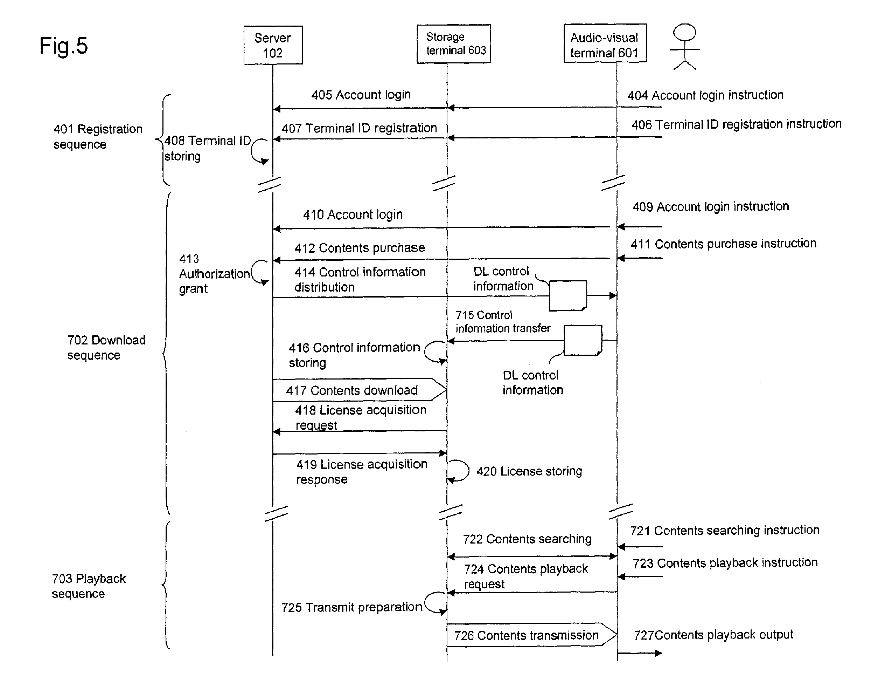

Figure 5 shows a process and a communication sequence in which a user downloads and views and listens to contents by operating the terminals according to this embodiment. In the following, the operations and the communication procedure will be described step-by-step with reference to Figure 5.

In Figure 5, the audio-visual terminal 601, the server 102 and the storage terminal 603 have the configurations shown in Figure 4 and therefore are denoted by the same reference numerals, and illustration of components that offer only well-known functions, such as the network, is omitted. The sequence shown in Figure 5 is generally divided into the registration sequence 401, a download sequence 702 and a playback sequence 703. Typically, these sequences are also temporally separated from each other. The registration sequence 401 is the same as in the first embodiment, and therefore, description thereof will be omitted.

The download sequence 702 and the playback sequence 703 are performed any number of times by operations of the user on the user interface of the audio-visual terminal 601.

The download sequence 702 is started when the user wants to purchase or rent contents. The process from the account login instruction 409 to the control information distribution 414 is the same as in the first embodiment, and therefore, description thereof will be omitted.

In step 715 the audio-visual terminal 601 having received the DL control information takes out the DL control information in the HTML by the control information acquiring section 106 and transmits the DL control information to the control information transferring section 607. The control information transferring section 607 is a communication module capable of communicating with the control information acquiring section 615 in the storage terminal 603 through a CEC control line housed in the HDMI cable. The control information transferring section 607 immediately transfers the information received from the control information acquiring section 106 to the control information acquiring section 615 in the storage terminal 603, in a control information transfer communication 715.

The storage terminal 603 having received the DL control information stores the DL control information in the control information storage section 116 in step 416. This embodiment is **characterized in that** the communication between the control information transferring section 607 and the control information acquiring section 615 does not involve any information that requires protection, such as a contents key included in the license, and therefore, information can be transferred in plain text without encryption. Furthermore, this embodiment differs from the first embodiment in that the storage terminal 603 does not accept the DL control information which is transferred from a terminal other than the terminal to which the storage terminal 603 is directly HDMI-connected and therefore has an advantage that the storage terminal 603 is less susceptible to an attack via the network.

Then, based on the DL control information stored in the control information storage section 116, the storage terminal 603 performs the operations in steps 417 to 420 as in the first embodiment, to download the contents and acquire the relevant license.

Then, the playback sequence 703 is started when the user wants to search and play back the downloaded contents. More specifically, the playback sequence 703 is started by the user operating the audio-visual terminal 601 to issue an instruction to search the downloaded contents in step 721.

In this embodiment, the contents searching method can be implemented using the UI of the storage terminal 603, by setting the screen display of the audio-visual terminal 601 to display the HDMI input from the storage terminal 603 and then by transferring the operation on the audio-visual terminal 601 by the user to the storage terminal 603 via the CEC line. Such an UI linkage of this type has been put into practical use as a HDMI-based link system between a TV set and a recorder. In this way, the desired contents can be displayed on the audio-visual terminal 601.

Then, in step 723, the user operates the audio-visual terminal 601 to instruct to play back the downloaded contents. The audio-visual terminal 601 having received the instruction, issues a contents playback request 724 through the CEC line. The storage terminal 603 having received the contents playback request 724, prepares itself to determine whether to transmit the contents or not and to transmit the contents in step 725. More specifically, the storage terminal 603 retrieves the license from the license storage section 118, compares the playback period information t1 to t2 in the license with the current time, and determines that transmission of the contents is permitted only if the current time is within the expiration date.

Furthermore, the storage terminal 603 checks the permitted destination in the license and determines that transmission to the HDMI is permitted since the permitted destination includes the HDCP, which indicates the inter-device authorization specification of the HDMI transmission line. The storage terminal 603 having determined that transmission is permitted sets the encryption key Kc1 in the decryption section 119 to start an operation of decrypting the downloaded encrypted contents into a plain text, encrypts the plain text again by using HDCP encryption key by the HDMI encryption section 620, and starts a contents transmission 726.

The audio-visual terminal 601 having received the contents transmission 726 decrypts the HDCP encryption by the HDMI decryption section 608, starts decoding the compressed contents by the decoding section 109, and provides the decoded output 110. This transmission path protection method allows protection from eavesdropping and tampering and realizes proper observance of the specified expiration date even when the contents protected by DRM is transmitted between the audio-visual terminal 601 and the storage terminal 603.

By the sequence described above, a contents playback 727 can be performed, and such contents rental system can be realized that the contents downloaded to a terminal previously registered in the server 102 is permitted to be viewed and listened to only within the expiration date.

### (Third Embodiment)

In the following, a third embodiment of the present invention will be described with reference to the drawings.

This embodiment differs from the first embodiment primarily in that transmission of the download control information does not occur between the audio-visual terminal and the server but directly between the server and the storage terminal.

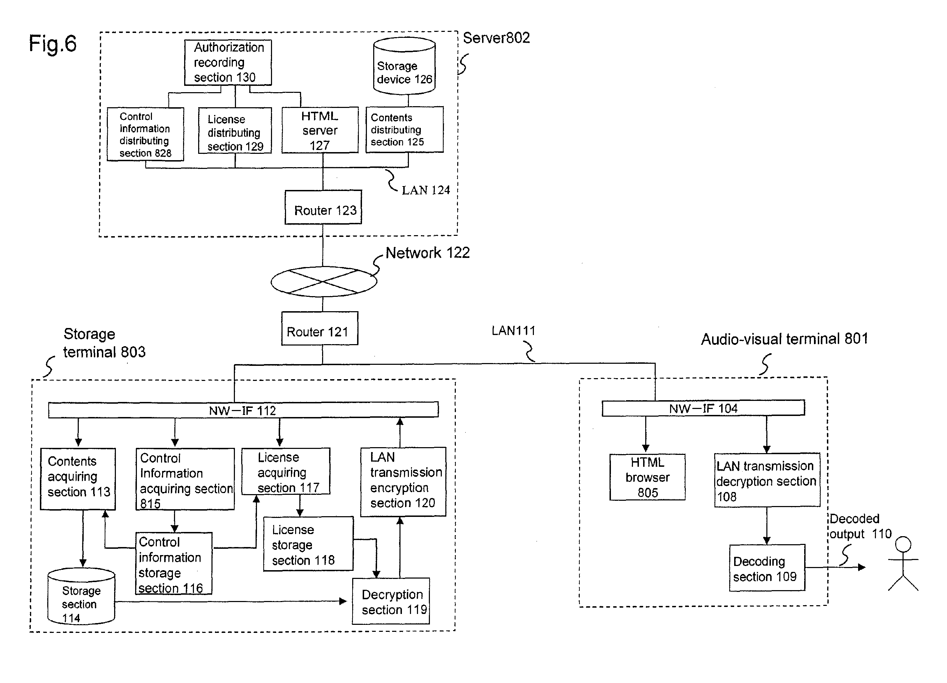

In this embodiment, modules that operate in essentially the same way as in the first embodiment are denoted by the same reference numerals as those in the first embodiment. Figure 6 shows a configuration of a system according to this embodiment.

An audio-visual terminal according to the third embodiment is an example of an instruction terminal according to the present invention.

An audio-visual terminal 801 and a storage terminal 803 are connected to the LAN 111. These terminals 801 and 803 are connected to a server 802 via the router 121 and the network 122.

The audio-visual terminal 801 comprises the network IF 104, a LAN transmission decryption section 108, the decoding section 109 and a HTML browser 805.

The storage terminal 803 comprises the network IF 112, the contents acquiring section 113, the storage section 114, the decryption section 119, the LAN transmission encryption section 120, a control information acquiring section 815, the control information storage section 116, the license acquiring section 117 and the license storage section 118.

The server 802 comprises the contents distributing section 125, the storage device 126, the HTML server 127, a control information distributing section 828, the authorization recording section 130, the license distributing section 129, the router 123 and the LAN 124. The contents distributing section 125, the HTML server 127, the license distributing section 129, the control information distributing section 828 and other sections are a group of servers each of which has a CPU and operates independently and are interconnected by the LAN 124 installed in the server site to cooperate with each other to provide an integrated download server functionality as a whole.

The audio-visual terminal 801 may be, for example, a network digital TV set having a HTML browser. The storage terminal 803 may be, for example, a network digital recorder. Although not shown in Figure 6, the audio-visual terminal 801 and the storage terminal 803 each have a user interface, such as a remote controller and a GUI screen, through which the functions of the terminals can be individually accessed by the user.

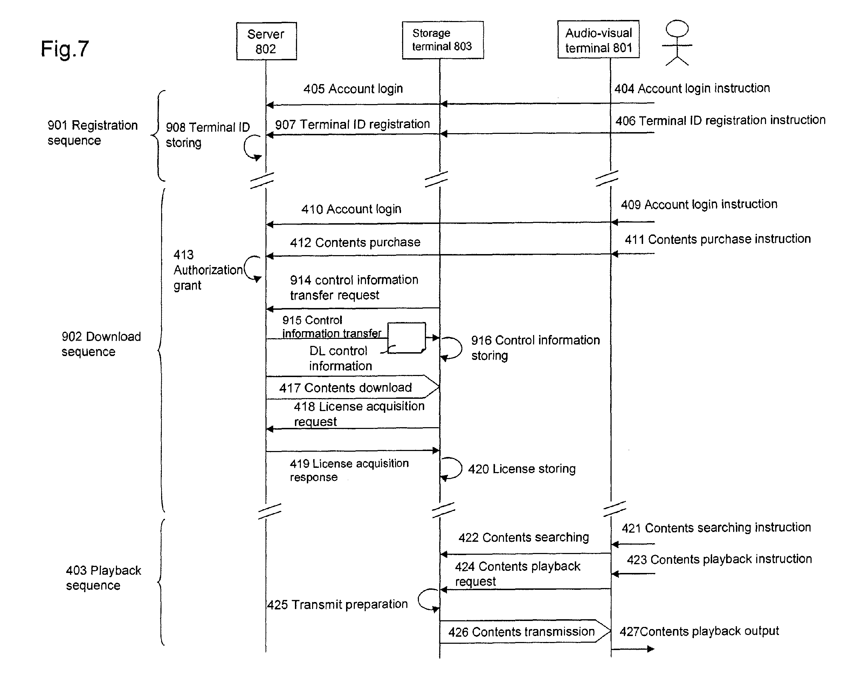

Figure 7 shows a process and a communication sequence in which a user downloads and views and listens to a contents by operating the terminals according to this embodiment. In the following, the operations and the communication procedure will be described step-by-step with reference to Figure 7. In Figure 7, the audio-visual terminal 801, the server 802 and the storage terminal 803 have the configurations shown in Figure 6 and therefore are denoted by the same reference numerals, and illustration of components that offer only well-known functions, such as the network, is omitted.

The sequence shown in Figure 7 is generally divided into a registration sequence 901, a download sequence 902 and the playback sequence 403. Typically, these sequences are also temporally separated from each other. The registration sequence 901 is a service registration procedure that has to be performed only once, for example ,when the storage terminal 803 is purchased and installed. The registration sequence 901 is performed through the user interface of the storage terminal 803. The download sequence 902 and the playback sequence 403 are performed any number of times by operations of the user on the user interface of the audio-visual terminal 801.

In the registration sequence 901, first, the user issues the account login instruction 404 to operate the storage terminal 803, thereby accessing the server 802 using the HTML browser or other communication applications to perform the account login communication 405.

After the process from the account login instruction 404 to the terminal ID registration operation 406 is performed in the same way as in the first embodiment, the storage terminal 803 having received the terminal ID registration operation 406, in a terminal ID registration 907, transmits the terminal ID of the storage terminal 803 to the server 802 and then starts a polling operation to the server 802 of a DL control information distribution request.

In this polling operation, the storage terminal 803 regularly transmits a DL control information distribution request to the server 802 and checks the presence or absence of the DL control information concerning the terminal ID of the storage terminal 803.

In step 908, the server 802 having received the terminal ID registration 907 registers the terminal ID of the storage terminal 803 in the account entry of the user. By the sequence described above, the terminal ID is registered in association with the account of the user, and the polling from the storage terminal 803 is started.

The download sequence 902 is started when the user wants to purchase or rent a contents.
Steps 409 to 413 are the same as in the first embodiment, and thus description thereof will be omitted. An authorization to use based on device binding shown in Figure 3 is granted to the terminal ID "0xABCDEF" of the storage terminal 803 and registered in the entry having the license ID "0001".

Since the storage terminal 803 regularly transmits the DL control information distribution request as described above, the server 802 receives a control information transfer request 914 at times depending on the polling cycle. The control information transfer request 914 includes the ID "0xABCDEF" of the storage terminal 803, which agrees with the ID in the entry having the license ID "0001", and therefore, the server 802 confirms the agreement and then distributes the DL control information including the license ID "0001" to the storage terminal 803 via the control information distributing section 828 as a response to the control information transfer request 914 in step 915.

The DL control information referred to herein is information necessary to acquire the contents and the license, and includes the URL of the contents stored in the control information distributing section 828 and the ID of the license stored in the authorization recording section 130.

The control information acquiring section 815 of the storage terminal 803 having received the DL control information stores the DL control information in the control information storage section 116 in step 916. Then, as in the first embodiment, the storage terminal 803 performs the operations in steps 417 to 420 based on the DL control information stored in the control information storage section 116.

By the sequence described above, download of the contents and acquisition of the relevant license are completed.

This embodiment has an advantage that the audio-visual terminal 801 has only an ordinary browser and does not need a special plug-in and the storage terminal 803 performs polling and unauthorized registration by a third party can be easily prevented only by authentication of the server 802.

The playback sequence 403 is the same as in the first embodiment, and description thereof will be omitted.

By the sequence described above, a contents rental system permits contents to be downloaded only to a terminal previously registered in the server 102 and the contents to be viewed and listened to on the terminal only within the expiration date.

### (Fourth Embodiment)

In the following, a fourth embodiment of the present invention will be described with reference to the drawings. This embodiment differs from the third embodiment primarily in that a control terminal is provided as well as audio-visual terminal and a contents purchase instruction and so on are transmitted from the control terminal to a server.

A control terminal according to the embodiment is an example of an instruction terminal according to the present invention.

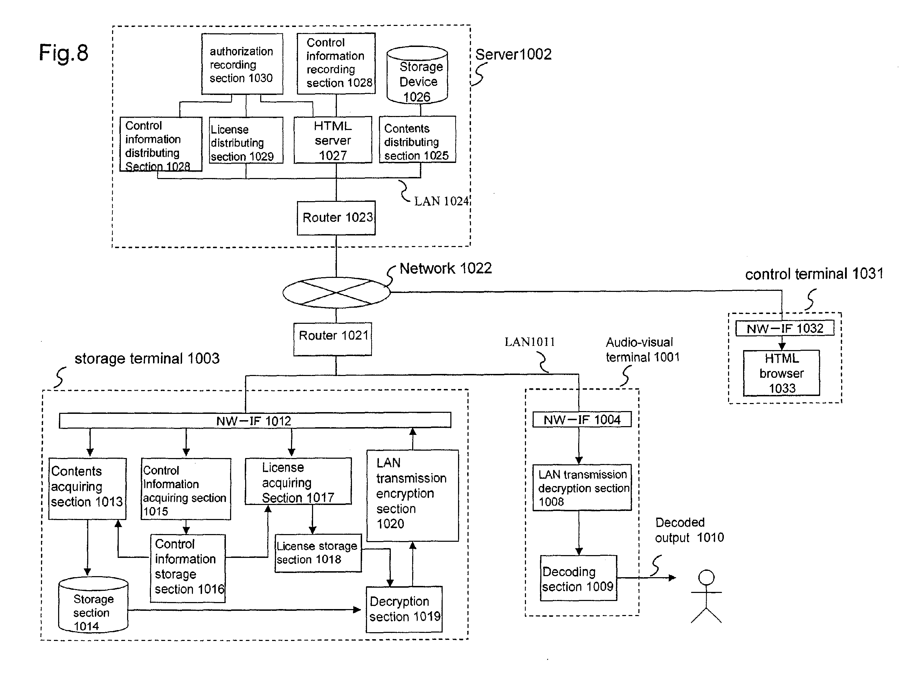

Figure 8 shows a configuration of a system according to this embodiment. An audio-visual terminal 1001 and a storage terminal 1003 are connected to a LAN 1011. These terminals 1001,1003 are connected to a server 1002 via a router 1021 and a network 1022. The control terminal 1031 is connected to the server 1002 via a network 1022.

The audio-visual terminal comprises a network IF 1004, a LAN transmission decryption section 1008, a decoding section 1009. The decoding section 1009 has a function of providing a decoded output 1010, which is corresponding to a function of, for example, outputting an image to a TV screen.

The storage terminal 1003 comprises a network IF 1012, a contents acquiring section 1013, a storage section 1014, a decryption section 1019, a LAN transmission encryption section 1020, a control information acquiring section 1015, a control information storage section 1016, a license acquiring section 1017 and a license storage section 1018.

The control terminal 1031 comprises a network IF 1032 and a HTML browser 1033.

The server 1002 comprises a contents distributing section 1025, a storage device 1026, a HTML server 1027, a control information distributing section 1028, an authorization recording section 1030, a license distributing section 1029, a router 1023 and a LAN 1024. The contents distributing section 1025, the HTML server 1027, the control information distributing section 1028, the license distributing section 1029 and other sections are a group of servers each of which has a CPU and operates independently and are interconnected by the LAN 1024 installed in the server site to cooperate with each other to provide an integrated download server functionality as a whole. Of course, alternatively, these functions can also be provided by one server.

The contents distributing section 1025 is provided with the storage device 1026 and allows the storage terminal 1003 to download an AV contents file stored in the storage device 1026 through the network 1022.

The AV contents file referred to herein means real-time data containing video, audio and the like. For example, the AV contents file may be a MPEG2 file or a MP3 file. The audio-visual terminal 1001 may be, for example, a network digital TV set. The storage terminal 1003 may be, for example, a network digital recorder. The control terminal 1031 may be, for example mobile telephone having a browser. Although not shown in Figure 8, the audio-visual terminal 1001, the storage terminal 1003 and the control terminal 1031 each have a user interface, such as a remote controller and a GUI screen, through which the functions of the terminals can be individually accessed by the user.

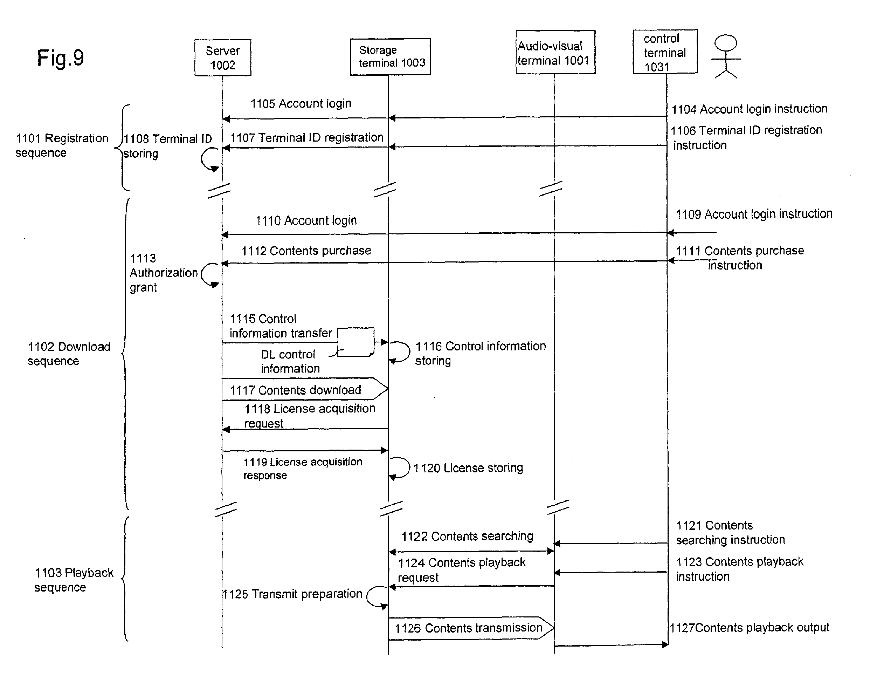

Figure 9 shows a process and a communication sequence in which a user downloads and views and listens to contents by operating the terminals according to this embodiment. In the following, the operations and the communication procedure will be described step-by-step with reference to Figure 9.

In Figure 9, the audio-visual terminal 1001, the server 1002, the storage terminal 1003 and the control terminal 1031 have the configurations shown in Figure 8 and therefore are denoted by the same reference numerals, and illustration of components that offer only well-known functions, such as the network, is omitted. The sequence shown in Figure 9 is generally divided into a registration sequence 1101, a download sequence 1102 and a playback sequence 1103. Typically, these sequences are also temporally separated from each other.

The registration sequence 1101 is a service registration procedure that has to be performed only once when the storage terminal 1003 is purchased and installed, for example and the registration sequence is performed through the user interface of the storage terminal 1003. The download sequence 1102 and the playback sequence 1103 are performed any number of times by operations of the user, on the user interface of the control terminal 1031 for the download sequence 1102 and on the user interface of the audio-visual terminal 1001 for the playback sequence 1103.

In the registration sequence 1101, first, the user issues an account login instruction 1104 to operate the storage terminal 1003, thereby accessing the server 1002 using the HTML browser or other communication applications to perform an account login communication 1105. The account referred to herein is used for managing the history of purchase of contents or managing billing information about the purchased contents. The user previously acquires the account by making a contract with a contents distributor. The account name and the account password for identifying each account and other entries including settlement method information required for billing are stored in the server 1002. By issuing the account login instruction 1104, the user can enter the account name and the password to perform login.

Then, the user operates the storage terminal 1003 to perform a terminal ID registration operation 1106. This operation can be performed by pushing a terminal ID registration button in a HTML page in the storage terminal 1003, for example. The terminal ID referred to herein is an ID for uniquely identifying a terminal for granting an authorization to use per every terminal based on a device binding method. The terminal ID is built-in in the storage terminal 1003 before shipping, and spoofing of the terminal ID is prevented by issuing a certificate of the ID, for example.

Once the terminal ID registration operation 1106 occurs, the storage terminal 1003 performs communication for a terminal ID registration 1107 in response to an instruction received from a button in the HTML page via a plug-in and transmits the terminal ID of the storage terminal 1003 to the server 102. The server 1002 having received the terminal ID registration 1107 registers the terminal ID of the storage terminal 1003 in the account entries of the user in step 1108. Through the sequence described above, the terminal ID is registered in association with the account of the user.

In the above description, the storage terminal 1003 identifies the terminal ID. Alternatively, however, the user can directly enter and register the terminal ID. Although the direct entry increases the effort of the user, it has an advantage that registration of the terminal ID can be performed on the control terminal 1031, a PC or the like, and thus the storage terminal 1003 does not have to have the HTML browser.

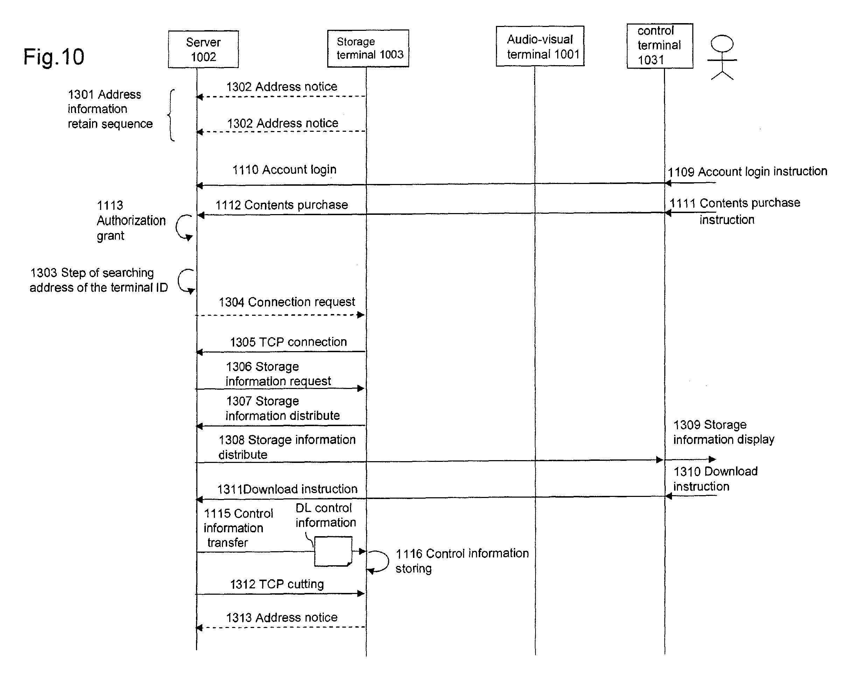

Further in this embodiment address information which is used by the server 1002 for starting at any timing a communication to the storage terminal 1003, is registered on the server 1002 (address information retain sequence 1301 of Figure 10 described after).

As the address information, an IP address of the storage terminal 1003, by using a method which is known as dynamic DNS for example, can be registered on the server 1002. Further it is particularly preferably to register and retain the address information according to a specified sequence (for example such sequence described in the Patent of register NO.3445986) for communicating from the server 1002 to the storage terminal 1003 via the router 1021.

That is concretely the storage terminal 1003 regularly sends an address notice UDP packet
in which a terminal ID of the storage terminal is recorded, to the server 1002. The server 1002 receiving it records a transmission source address of the address notice UDP packet, to the terminal ID registered in the account (address information retain sequence 1301 of Figure 10 described after). According to this method even when the IP address changes, the latest IP address can be recorded and therefore the server 1002 can start at any time the communication by transmitting for the recorded IP address a connection request UDP packet having same format as that of the response of the address notice UDP packet.

The download sequence 1102 is started when the user wants to purchase or rent contents. First, in the download sequence 1102, the user issues an account login instruction 1109 on the control terminal 1031 to access the server 1002 using the HTML browser or other communication application, thereby performing an account login communication 1110. This operation is the same as in the registration sequence 1101.

Then, the user browses the page provided by the server 1002 using the HTML browser, selects desired contents and performs a contents purchase operation 1111. This operation can be performed, for example, by pushing a button in a purchase form in the HTML page. The control terminal 1031 having received the contents purchase operation 1111, performs a contents purchase communication 1112 by form post or the like to specify the desired contents for the server 1002.

In step 1113 the server 1002 having received the contents purchase communication 1112 performs a required billing information registration and the like and then grants an authorization to use the specified contents to the account logging. At the same time, the server 1002 registers available period information, such as from t1 to t2, and a use condition, such as the interface that can be used for output and the medium into which the contents can be copied, depending on the purchase condition.

According to this embodiment, at the same time, the server 1002 grants an authorization to use based on the device binding to the terminal ID registered in association with the account to which the authorization to use is granted. More specifically, in step 1113, the server 1002 stores a combination of the license ID for authorization identification, the terminal ID of the storage terminal 1003 extracted from the entries for the account logging in, an encryption key for the contents and the use condition, in the authorization recording section 1030.

Figure 3 shows an example of a data table stored in the authorization recording section 1030. In this drawing, it is assumed that the terminal ID of the storage terminal 1003 is "0xABCDEF" and is registered in an entry whose license ID is "0001".

Then, in step 1115, the server 1002 distributes DL control information to the storage terminal 1003 via a control information distributing section 1028 as described below. A control information transfer communication 1115 is performed by above-mentioned specified communication method from a house outside server to a house inside device (see the Patent of register NO.3445986).

The DL control information referred to herein is information necessary to acquire the contents and the license, and includes the contents URL stored in the control information distributing section 1028 and the ID of the license stored in the authorization recording section 1030. The DL control information particularly preferably includes the URL of the license server in addition to the ID of the license to acquire the license, and this is implemented for this embodiment.

The storage terminal 1003 having received the DL control information by the control information acquiring section 1015, stores the DL control information in the control information storage section 1016 at step 1116.

In this embodiment, the storage terminal 1003 does not unconditionally accept the DL control information but checks the control information transfer communication 1115 before accepting and storing the DL control information. This check prevents damage by avoiding careless acceptance of the DL control information, when such DL control information that describes the URL of the destination of a DOS attack as the download target URL or describes the URL of advertising contents or the like, is transferred from a malicious third party. Specifically, the DL control information may be accepted only if a server authentication by the storage terminal 1003 is successful, or alternatively, the server 1002 may previously issue a certificate to the DL control information by using a secret key stored only by the server 1002, and the storage terminal 1003 may accept the DL control information only if the storage terminal 1003 verifies the signature using the public key. This method has effective merits.

Then the above described specified communication method from the account login instruction 1109 to the control information transfer communication 1115 is described in detail according to Figure 10.

The address information retain sequence 1301 is regularly performed after the registration sequence 1101 as described above, and in the sequence the storage terminal 1003 regularly, for example every several minutes, sends an address notice UDP packet 1302 in which a terminal ID is recorded, to the server 1002. The server 1002 receiving it records a transmission source address of the address notice UDP packet, to the terminal ID registered in the account.

When the address information retain sequence 1301 is regularly performed, steps from the account login instruction 1109 to the granting of the authorization to use for the terminal ID 1113 are normally executed, the server 1002 extracts an IP address of the terminal ID registered in the account at step 1303. Since the IP address is the latest IP address for the storage terminal 1003, communication can be performed by using this, and the server 1002 transmits a connection request UDP packet 1304 having the same format as that of the response of the address notice UDP packet 1302.

The storage terminal 1003 having received the connection request UDP packet 1304, makes TCP connection 1305 to the server 1002. Here the reason why the server 1002 does not make the connection directly to the storage terminal 1003 is that since generally the router 1021 intercepts the TCP connection request from internet side, communication from the internet side can be started by transmitting the connection request UDP packet 1304 as a response to the address notice UDP packet. Thereafter communication can be freely performed on the TCP connection.

Then the server 1002 transmits a storage information request 1306 to the storage terminal 1003.

The storage terminal 1003 having received it, responds with a storage information 1307. The storage information 1307 is described by HTML for example, and includes necessary information for controlling the downloading, such as information of contents list and empty capacity in the storage terminal 1003, information of download sequence being executed, information of present possibility of acceptance of download request, and so on.

The server 1002 transmits it to the control terminal 1031 at the storage information distribute 1308, and the control terminal 1031 displays it for the user by the HTML browser 1033 at the storage information display 1309.

By such relay communication of HTML by the server 1002, the user can confirm the information which is necessary to control downloading. Further the user can execute such operation as erasing unnecessary contents by using CGI to get empty capacity.

Then the user instructs the download instruction 1310 by using the control terminal 1031, and the server 1002 having received it at step 1311 transmits the control information transfer 1115 on the TCP connection to the storage terminal 1003, and thereafter executes a TCP cutting process 1312 to complete the process series.

After the completion, the storage terminal 1003 further continues the regular address notice 1313, to prepare for the next download instruction.

According to this method an API for obtaining HDD capacity or API for obtaining downloading status can be transmitted to be open, from the control terminal 1031 to the server 1002. Therefore the control terminal 1031 can communicate with the storage terminal 1003 in real time via the server 1002 and control it.

According to this method such functions that the control terminal 1031 confirms the empty capacity of HDD of the storage terminal 1003 to erase unnecessary contents and confirms the present downloading status, can be realized at the same time to show particularly convenient effects.

Then, in step 1117, the storage terminal 1003 downloads the contents based on the DL control information stored in the control information storage section 1016. For example, the download is performed by an HTTP GET method for the URL of the contents, issued from the contents acquiring section 1013. The download is completed by acquiring the entire content and storing the contents in the storage section 1014 in the storage terminal 1003.

Once the download is completed, in step 1118, the storage terminal 1003 issues a license acquisition request to the server 1002 from the license acquiring section 1017 based on the DL control information stored in the control information storage section 1016. The destination of the communication for requesting the license is the URL of the license server included in the DL control information.

The license acquisition request 1118 involves the license ID for specifying the desired license and the terminal ID of the storage terminal 1003 that requests the license.

The server 1002 having received the license acquisition request 1118 checks whether the specified license has been purchased in the name of the specified terminal ID or not by verifying the license acquisition request 1118 with searching the authorization recording section 1030. In this embodiment, since there is an entry that agrees with the specified terminal ID "Ox4BCDEF" and with the license ID "0001", the server 1002 determines that the license is granted and distributes the license in a license acquisition response 1119. The license referred to herein is information for limiting the method of playback of the contents. More specifically, the license includes an encryption key Kc1 for decrypting the encrypted contents, the available period of the encryption key (t1 to t2) and the permitted destination (HDCP, DTCP).

The storage terminal 1003 having received the license stores the license in the license storage section 1018 in step 0020. By the sequence described above, the download of the contents and the acquisition of the relevant license are completed.

Then, the playback sequence 1103 is started when the user wants to retrieve and play back the downloaded contents. More specifically, the playback sequence 403 is started by the user operating the audio-visual terminal 1001 to issue an instruction to search the downloaded contents in step 0021. In this embodiment, as the contents searching method such method is adopted using the contents searching service of the above described CDS of the UPnP method compliant with the DLNA.

Although the detailed sequence is not shown, in response to the contents searching instruction, a contents searching communication 1122 is bidirectionally performed a plurality of times between the audio-visual terminal 1001 and the storage terminal 1003, and then, the desired contents can be displayed on the audio-visual terminal 1001.

Then, in step 1123, the user operates the audio-visual terminal 1001 to instruct to play back the downloaded contents. The audio-visual terminal 1001 having received the instruction issues a contents playback request 1124 according to the DLNA method. The contents playback request 1124 referred to herein has an inter-device authentication and transmission path encryption function compliant with the DTCP standard as the contents protection method, and the LAN transmission encryption section 1020 has the functionality of a DTCP-IP server, and the LAN transmission decryption section 1008 has the functionality of a DTCP-IP client. This transmission path protection method allows protection from eavesdropping and tampering and realizes proper observance of the specified expiration date even when the contents protected by DRM is transmitted between the audio-visual terminal 1001 and the storage terminal 1003.

In step 1125 the storage terminal 1003 having received the contents playback request 1124 prepares itself to determine whether to transmit the contents or not and to transmit the contents. More specifically, the storage terminal 1003 retrieves the license from the license storage section 1018, compares the playback period information t1 to t2 in the license with the current time, and determines that transmission of the contents is permitted only if the current time is within the expiration date. Furthermore, the storage terminal 1003 checks the permitted destination in the license and determines that transmission to the DTCP is permitted since the permitted destination includes the DTCP. The storage terminal 1003 having determined that transmission is permitted, sets the encryption key Kc1 in the decryption section 1019 to start an operation of decrypting the downloaded encrypted contents into a plain text, encrypts the plain text again by using a DTCP encryption key by the LAN transmission encryption section 1020, and starts a contents transmission 1126 to the LAN.

The audio-visual terminal 1001 having received the contents transmission 1126 decrypts the DTCP encryption by the LAN transmission decryption section 1008, starts decoding the compressed contents by the decoding section 1009, and provides the decoded output 1010. By the sequence described above, a contents playback 1127 can be performed.

In the case where the user instructs to play back the contents after the rental period is expired, it turns out that the rental period is expired in step 1125 where the playback period information t1 to t2 in the license is compared with the current time, and therefore, the contents transmission in step 1126 is not performed. Thus, the expiration date can be observed.

By the sequence described above, such contents rental system can be realized that the contents downloaded to a terminal previously registered in the server 1002 is permitted to be viewed and listened to only within the expiration date.

In this way, according to this embodiment, the first problem of the prior art can be solved because the user can view and listen to the contents downloaded to the audio-visual terminal 1001 having no storage device.

Furthermore, the second problem of the prior art can also be solved because the audio-visual terminal 1001 does not incorporate the storage terminal 1003 but is connected to the storage terminal 1003 via the network.

The terminal on which the user can view and listen to is not limited to the audio-visual terminal 1001, and any terminal having the DTCP-IP client functionality can play back the contents by transmitting the contents playback request to the storage terminal 1003. With this arrangement, even a client having no DRM client functionality can play back the contents on the audio-visual terminal having the DTCP-IP client functionality in the same LAN so that the number of terminals having the DRM functionality can be reduced. Thus, the fourth problem of the prior art can be solved.

Furthermore, even when the user operates the local GUI of the storage terminal 1003 itself to issue an instruction to play back the downloaded contents, the contents are decrypted into a plain text by the decryption section 1019 and then decoded by a decoder not shown in the storage terminal 1003, to become capable of playback. Thus, the third problem of the prior art can be solved.

As described above, this embodiment can solve the first to fourth problems of the prior art at the same time.

Further the control terminal 1031 does not need a special function other than HTML browser. Specifically the control terminal can be a conventional mobile telephone having a HTML browser, and therefore the user starts the download sequence at any place with no place limitation by running the browser. Then the downloaded contents can be viewed by the audio-visual terminal in a house after coming home. Therefore it is very convenient. Further by using the IR reception function and a bar-code reader function of the mobile telephone, the promotion of download contents at the places such as the outdoor advertisement or video rental store, can be performed to start the download sequence 1102 promptly as the result. Thus the system having high promotion effect can be realized.

Although the transmission path protecting means in this embodiment is the DTCP, any other protecting means, such as the HDCP, can also be used.

Now in the present embodiment the control information transfer communication 1115 is executed according to a communication from the server 1002 to the storage terminal 1003, but instead of it the polling method can be used from the storage terminal 1003 to the server 1002 as described above.

### (fifth Embodiment)

In the following, a fifth embodiment of the present invention will be described with reference to the drawings.

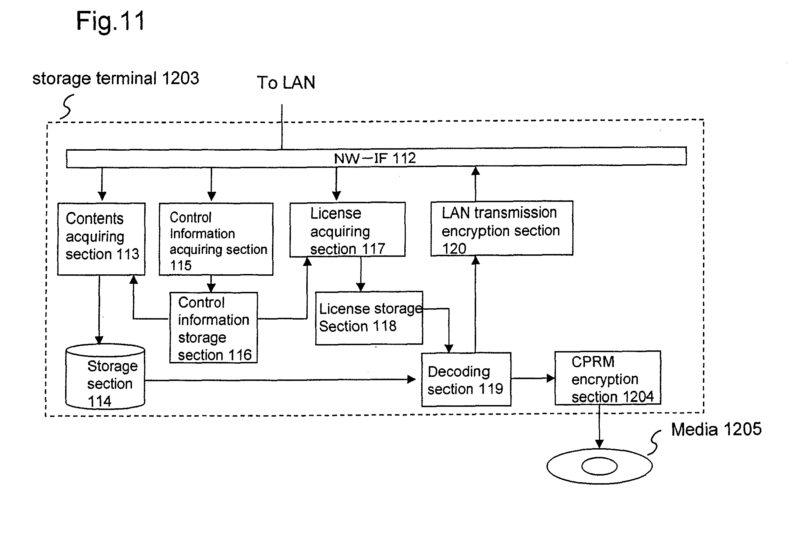

Figure 11 shows a configuration of a system according to this embodiment. Now the present embodiment is such system that medium output function is added to the storage terminal 103 of the first embodiment. The configuration of other terminal and server is same and then it is named as a storage terminal 1203 and only configuration of the storage terminal 1203 is described.

The storage terminal 1203 is connected to the server 102 via LAN 111. The storage terminal 1203 comprises a network IF 112, a contents acquiring section 113, a storage section 114, a decryption section 119, a LAN transmission encryption section 120, a control information acquiring section 115, a control information storage section 116, a license acquiring section 117, a license storage section 118, and further CPRM encryption section 1204, DVD-R medium 1205, and a drive which is necessary for DVD-writing though not shown.

In the embodiment sequences from the downloading of the contents to the storage terminal 1203 to the playback by the audio-visual terminal 101, are equivalent to the first embodiment and Figure 2, and then they are omitted. In the embodiment such operation differs from the operation of the first embodiment, that the user directly operates the local operation UI of the storage terminal 1203 to write the downloaded contents to the DVD-R. Here in the Figure 3 such operation in case that the terminal ID is "0x012345" and "DVD-CPRM"is included in media which are permitted under the use condition, is described.

When the user instructs that the downloaded contents are written on the DVD-R, the storage terminal 1203 confirms the use condition stored in the license storage section 118. As the result the writing to the DVD is determined to be accepted, and then the storage terminal 1003 sets the encryption key Kc2 in the decryption section 119 and starts an operation of decrypting the downloaded encrypted contents into a plain text. The storage terminal 1203 encrypts the plain text again by using a CPRM encryption key by the CPRM encryption section 1204, to start the writing to the DVD-R medium.

According to such sequence the writing of the downloaded contents from the server 102 to the DVD-R medium can be permitted. For example in an assumed case where the audio-visual terminal 101 gets the DRM encryption key Kc2, the storage terminal 1203 can not get a necessary key, thereby not to decrypt it and writing it to DVD-R medium 1205. However in the fifth embodiment the writing to the medium on the storage terminal 1203 and the function of viewing and listening on the audio-visual terminal 101 can be easily compatible. Such superior feature exists.

In the embodiment the output medium is DVD-R but any medium can be applied such as removable HDD, SD card and an external drive device connected via 1394 standard.

Now the audio-visual terminal 102 and the storage terminal of the present invention can be realized by using one STB. Or any one of both terminals can be realized by STB.

And in the above embodiment the server 102 has such configuration that the each server is connected via LAN but such configuration can be realized that each server operates independently but the servers are cooperated with each other by the interface such as WEB API via internet. According to this configuration similar effect can be realized even under such case that for example functions of one or some servers among the servers are offered as ASP server by different enterprise.

Alternatively, the functions of the servers of the present invention can be realized by one server of course.

The program according to the present invention is the program for enabling the computer to perform the functions of each part of the system etc. of the present invention as described above, and operated in cooperation with the computer.

Also, a recording medium according to the present invention records the program for enabling the computer to perform the functions of each part of the system etc. of the present invention as described above, and is readable by the computer, whereby the read program performs the functions in cooperation with the computer.

In one use form of the program according to the present invention, the program may be recorded in the recording medium such as ROM readable by the computer, and operated in cooperation with the computer.

Also, in another use form of the program according to the present invention, the program may be transmitted across the network such as the Internet, or through the transmission media such as light, electric wave or sound wave, read by the computer and operated in cooperation with the computer.

Also, the computer according to the present invention described above is not limited to the pure hardware such as CPU, but may comprise a firmware, OS, or peripheral devices.

As described above, the configuration of the present invention may be implemented by software or hardware.

### [INDUSTRIAL UTILITY]

According to the present invention such contents rental service can be realized that the image or audio contents are downloaded via a network, and they are permitted to be played back only within the expiration date.

Then the present invention has such remarkable merits that the user can view and listen to the contents downloaded to the audio-visual terminal having no storage device, the storage terminal which is not incorporate type, can be used as the download destination device, the playing back of the contents can be performed by the operation UI of the audio-visual terminal and by the operation UI of the storage terminal, and the downloaded contents can be viewed and listened to without providing DRM function for all terminals. Therefore it is useful for a system where AV contents are distributed and played back by using a network.

## Claims

1. A network AV contents playback system, comprising:
an audio-visual terminal; and
a storage terminal,
**characterized in that** said audio-visual terminal
establishes a first connection protected by authentication and encryption, to one or more servers providing AV contents on a network,
acquires an authorization to use of said AV contents by said first connection, concurrently acquires download control information including AV contents location information that indicates a location of said AV contents on said network and license information about said AV contents, and
transmits said acquired download control information to said storage terminal, and
said storage terminal
acquires said download control information from said audio-visual terminal, downloads said AV contents from said server based on said AV contents location information via said network and stores said AV contents,
acquires a license of said AV contents from said server based on said license information and stores the license, and
uses said AV contents for a predetermined period based on said stored license.

2. The network AV contents playback system according to Claim 1, **characterized in that** when said audio-visual terminal acquires an authorization to use, said audio-visual terminal acquires the authorization by specifying a purchase account and, as a result, acquires said download control information including at least the license information that permits decryption by said storage terminal, and
said license information includes a license ID that identifies the authorization to use in said server.

3. The network AV contents playback system according to Claim 2, **characterized in that** said storage terminal
establishes a second connection protected by authentication and encryption, to said server,
by using said second connection, transmits a license acquisition request including the license ID of said AV contents and an ID of said storage terminal, to said server,
acquires the license of said AV contents from said server as a response to said license acquisition request and stores the license, and
decrypts said AV contents in said storage terminal by using an AV contents encryption key included in said license.

4. The network AV contents playback system according to Claim 3, **characterized in that** said storage terminal
establishes a third connection protected by authentication and encryption, and
transmits said decrypted AV contents via said third connection, and
said audio-visual terminal displays said AV contents received from said storage terminal via said third connection.

5. The network AV contents playback system according to Claim 4, **characterized in that** transmission of said download control information or said AV contents between said audio-visual terminal and said storage terminal is performed via a LAN or HDMI connection provided between said storage terminal and said audio-visual terminal.

6. The network AV contents playback system according to Claim 3, **characterized in that** in a case where said storage terminal receives a request for playback of said AV contents from said audio-visual terminal, said storage terminal establishes a third connection protected by authentication and encryption, to said audio-visual terminal and transmits said decrypted AV contents via said third connection, and
said audio-visual terminal displays said AV contents received from said storage terminal via said third connection, and
in a case where said storage terminal receives a request for output of said AV contents from a user interface provided in said storage terminal itself, said storage terminal outputs said decrypted AV contents to an output destination specified by said user interface.

7. The network AV contents playback system according to Claim 3, **characterized in that** said audio-visual terminal
has a browser,
establishes said first connection protected by authentication and encryption, to said server on said network by an SSL connection of the browser,
acquires the authorization to use of said AV contents via said first connection, concurrently acquires the download control information including the AV contents location information that indicates the location of said AV contents on said network and the license information about said AV contents, and
transmits said acquired download control information to said storage terminal by a communication module activated via said browser.

8. The network AV contents playback system according to Claim 3, **characterized in that** in a case where it is confirmed that said audio-visual terminal is LAN-connected to said storage terminal, said storage terminal acquires and uses said download control information, and in a case where said audio-visual terminal is not LAN-connected to said storage terminal, said storage terminal does not acquire said download control information.

9. The network AV contents playback system according to Claim 3, **characterized in that** said storage terminal performs authentication for said audio-visual terminal and acquires and uses said download control information in a case where said audio-visual terminal is previously registered in a reliable connection target, but does not acquire said download control information in a case where said audio-visual terminal is not previously registered in a reliable connection target.

10. The network AV contents playback system according to Claim 3, **characterized in that** said storage terminal acquires and uses said download control information in a case where it is confirmed that a certificate granted to said download control information is legitimate, but does not acquire said download control information in a case where it is not confirmed that the certificate is legitimate.

11. The network AV contents playback system according to Claim 3, **characterized in that** said download control information is encrypted by inter-device authentication between said storage terminal and said audio-visual terminal.

12. The network AV contents playback system according to Claim 1, **characterized in that** said storage terminal is capable of outputting said AV contents to a medium based on said stored license.

13. One or more servers that communicate with an audio-visual terminal and a storage terminal via a network,
**characterized in that** said servers
retains an account and a terminal ID associated with said account,
establishes a first connection protected by authentication and encryption, to said audio-visual terminal,
grants an authorization to use of an AV contents, to said account via said first connection, concurrently transmits download control information including AV contents location information that indicates the location of said AV contents on said network and license information including a license ID that identifies the authorization to use of said AV contents on said server, to said audio-visual terminal, and
establishes a second connection protected by authentication and encryption to said storage terminal, and
when the server receives a license acquisition request from said storage terminal via said second connection, the server compares a license ID of an AV contents included in said license acquisition request with the license ID of the AV contents whose authorization to use is granted to said account to check whether the license IDs agree with each other, further compares a terminal ID included in said license acquisition request with the terminal ID associated with said account to check whether the terminal IDs agree with each other, and distributes a license to said storage terminal in a case where both agree with each other.

14. A network AV contents playback system, comprising:
an audio-visual terminal;
a storage terminal; and
one or more servers,
**characterized in that**
said servers retain an account and a terminal ID associated with said account,
said audio-visual terminal
establishes a first connection protected by authentication and encryption, to a server,
uses said first connection to acquire an authorization to use of AV contents granted to said account,
concurrently acquires download control information including AV contents location information that indicates the location of said AV contents on a network and license information including a license ID that identifies the authorization to use of said AV contents on said server, and
transmits said acquired download control information to said storage terminal,
said storage terminal
acquires said download control information from said audio-visual terminal,
establishes a second connection protected by authentication and encryption, to said server, and
uses said second connection to transmit a license acquisition request to said server, the license acquisition request including at least the license ID of said AV contents included in said license information and a terminal ID of said storage terminal,
said server
compares the license ID of the AV contents included in said license acquisition request with the license ID of the AV contents whose authorization to use is granted to said account to check whether the license IDs agree with each other, further compares the terminal ID of said storage terminal included in said license acquisition request with the terminal ID associated with said account to check whether the terminal IDs agree with each other, and distributes a license to said storage terminal in a case where both agree with each other, and
said storage terminal
acquires said license from said server, stores said license and decrypts said AV contents using an AV contents encryption key included in said license.

15. A network AV contents playback system, comprising:
an instruction terminal;
a storage terminal; and
one or more servers,
**characterized in that**
said servers retain an account and a terminal ID associated with said account,
said instruction terminal establishes a first connection protected by authentication and encryption, to a server and uses said first connection to acquire an authorization to use of AV contents granted to said account,
said storage terminal regularly establishes a fourth connection protected by authentication and encryption, to said server to request distribution of download control information,
said server distributes download control information including AV contents location information that indicates the location of said AV contents on a network and license information including a license ID that identifies the authorization to use of said AV contents on said server, to the storage terminal corresponding to the terminal ID associated with said account via said fourth connection in response to the request for distribution of said download control information,
said storage terminal downloads said AV contents from said server based on said AV contents location information in said download control information, and stores said AV contents,
said storage terminal establishes a second connection protected by authentication and encryption, to said server and uses said second connection to transmit a license acquisition request to said server, the license acquisition request including at least the license ID of said AV contents included in said license information and a terminal ID of said storage terminal,
said server compares the license ID of the AV contents included in said license acquisition request with the license ID of the AV contents whose authorization to use is granted to said account to check whether the license IDs agree with each other, further compares the terminal ID of said storage terminal included in said license acquisition request with the terminal ID associated with said account to check whether the terminal IDs agree with each other, and distributes a license to said storage terminal in a case where both agree with each other, and
said storage terminal acquires said license from said server, stores said license and decrypts said AV contents using an AV contents encryption key included in said license.

16. A network AV contents playback system, comprising:
an instruction terminal;
a storage terminal; and
one or more servers,
**characterized in that**
said servers retain an account and a terminal ID associated with said account,
said instruction terminal establishes a first connection protected by authentication and encryption, to a server and uses said first connection to acquire an authorization to use of an AV contents granted to said account,
said server, after said instruction terminal acquires the authorization to use of said AV contents, calls the storage terminal corresponding to the terminal ID associated with said account, to establish a fourth connection and distributes, to said storage terminal, download control information including AV contents location information that indicates the location of said AV contents on a network and license information including a license ID that identifies the authorization of said AV contents on said server,
said storage terminal downloads said AV contents from said server based on said AV contents location information in said download control information, and stores said AV contents,
said storage terminal establishes a second connection protected by authentication and encryption, to said server and uses said second connection to transmit a license acquisition request to said server, the license acquisition request including at least the license ID of said AV contents included in said license information and a terminal ID of said storage terminal,
said server compares the license ID of the AV contents included in said license acquisition request with the license ID of the AV contents whose authorization to use is granted to said account to check whether the license IDs agree with each other, further compares the terminal ID of said storage terminal included in said license acquisition request with the terminal ID associated with said account to check whether the terminal IDs agree with each other, and distributes a license to said storage terminal in a case where both agree with each other, and
said storage terminal acquires said license from said server, stores said license and decrypts said AV contents using an AV contents encryption key included in said license.

17. The network AV contents playback system according to Claim 16, **characterized in that**
said server requests a download progress list from said storage terminal after said instruction terminal acquires the authorization to use of said AV contents,
said storage terminal transmits said download progress list to said server via said network,
said server acquires the download progress list from said storage terminal and transfers the download progress list to said instruction terminal,
said instruction terminal externally displays the download progress list, and
said server distributes said download control information to said storage terminal in response to receiving a download instruction from said instruction terminal.

18. The network AV contents playback system according to Claim 15 or 16, **characterized in that**
said instruction terminal is a terminal that serves also as an audio-visual terminal having an audio-visual function or a terminal separate from an audio-visual terminal having an audio-visual function.

19. A program that makes a computer operate as the audio-visual terminal and the storage terminal in the network AV contents playback system according to Claim 1,
in which said audio-visual terminal establishes a first connection protected by authentication and encryption, to one or more servers providing AV contents on a network, uses said first connection to acquire an authorization to use of said AV contents, +concurrently acquires download control information including AV contents location information that indicates the location of said AV contents on said network and license information about said AV contents and transmits said acquired download control information to said storage terminal, and
said storage terminal acquires said download control information from said audio-visual terminal, downloads said AV contents from said servers via said network based on said AV contents location information, stores said AV contents, acquires a license of said AV contents from said servers based on said license information, stores the license and uses said AV contents for a predetermined period based on said stored license.

20. A program that makes a computer operate as the instruction terminal, the storage terminal and the server in the network AV contents playback system according to Claim 15,
in which said instruction terminal establishes a first connection protected by authentication and encryption, to said server and uses said first connection to acquire an authorization to use of an AV contents granted to said account,
said storage terminal regularly establishes a fourth connection protected by authentication and encryption, to said server to request distribution of said download control information, downloads said AV contents from said server based on said AV contents location information in said download control information, stores said AV contents, establishes a second connection protected by authentication and encryption, to said server, uses said second connection to transmit a license acquisition request to said server, the license acquisition request including at least the license ID of said AV contents included in said license information and a terminal ID of said storage terminal, acquires said license from said server, stores said license, and decrypts said AV contents using an AV contents encryption key included in said license, and
said server retains said account and the terminal ID associated with said account, distributes download control information including AV contents location information that indicates the location of said AV contents on the network and license information including a license ID that identifies the authorization of said AV contents on said server, to the storage terminal corresponding to the terminal ID associated with said account via said fourth connection in response to the request for distribution of said download control information, compares the license ID of the AV contents included in said license acquisition request with the license ID of the AV contents whose authorization to use is granted to said account to check whether the license IDs agree with each other, further compares the terminal ID of said storage terminal included in said license acquisition request with the terminal ID associated with said account to check whether the terminal IDs agree with each other, and distributes a license to said storage terminal in a case where both the license IDs and the terminal IDs agree with each other.

21. A program that makes a computer operate as the instruction terminal, the server and the storage terminal in the network AV contents playback system according to Claim 16,
in which said instruction terminal establishes a first connection protected by authentication and encryption, to said server and uses said first connection to acquire an authorization to use of an AV contents granted to said account,
said server retains said account and the terminal ID associated with said account, calls ,after said instruction terminal acquires the authorization of said AV contents, the storage terminal corresponding to the terminal ID associated with said account to establish a fourth connection, distributes download control information including AV contents location information that indicates the location of said AV contents on a network and license information including a license ID that identifies the authorization of said AV contents on said server to said storage terminal, compares the license ID of the AV contents included in said license acquisition request with the license ID of the AV contents whose authorization to use is granted to said account to check whether the license IDs agree with each other, further compares the terminal ID of said storage terminal included in said license acquisition request with the terminal ID associated with said account to check whether the terminal IDs agree with each other, and distributes a license to said storage terminal in a case where both the license IDs and the terminal IDs agree with each other, and
said storage terminal downloads said AV contents from said server based on said AV contents location information in said download control information, stores said AV contents, establishes a second connection protected by authentication and encryption, to said server, uses said second connection to transmit a license acquisition request to said server, the license acquisition request including at least the license ID of said AV contents included in said license information and the terminal ID of said storage terminal, acquires said license from said server, stores said license and decrypts said AV contents using an AV contents encryption key included in said license.

22. A recording medium accessible by a computer, in which the program according to any one of Claims 19 to 21 is recorded.
